# EUROPEAN PATENT SPECIFICATION

(11) **EP 3 032 679 B1**
(45) Date of publication and mention of the grant of the patent: **01.07.2020**
(21) Application number: 16153181.9
(22) Date of filing: 19.01.2011
(51) Int. Cl.: H02J 3/00, H02J 13/00, H02J 4/00, H04L 12/413, G05B 23/02, H02H 7/26

(54) **METHOD AND APPARATUS FOR CONTROL OF A POWER DISTRIBUTION SYSTEM**
VERFAHREN UND VORRICHTUNG ZUR STEUERUNG EINES STROMVERTEILUNGSSYSTEMS
PROCÉDÉ ET APPAREIL POUR LA COMMANDE D'UN SYSTÈME DE DISTRIBUTION D'ÉLECTRICITÉ

(30) Priority: 19.01.2010 US 296446 P; 12.03.2010 US 313597 P
(43) Date of publication of application: 15.06.2016
(62) Divisional of application: 11735116.3
(73) Proprietor: S & C Electric Company, Chicago, IL 60626 (US)
(72) Inventor: BIALLAS, Kenneth, Duvall, WA 98019 (US); NELSON, William Christian Tracy, Duvall, WA 98019 (US); HARRIS, Laurence, Duvall, WA 98019 (US); NUMEROV, Sergey, Walnut Creek, CA 94598 (US)
(74) Representative: Barker Brettell LLP

(56) References cited:
- EP-A2- 2 056 424
- WO-A1-2009/076410
- US-A- 6 018 449
- US-A1- 2008 225 452
- US-B1- 7 184 903
- IOANNIS S BAXEVANOS ET AL: "Implementing Multiagent Systems Technology for Power Distribution Network Control and Protection Management", IEEE TRANSACTIONS ON POWER DELIVERY, IEEE SERVICE CENTER, NEW YORK, NY, US, vol. 22, no. 1, 31 January 2007 (2007-01-31), pages 433-443, XP011152554, ISSN: 0885-8977, DOI: 10.1109/TPWRD.2006.877085
- D Macleman ET AL: "Evaluation of a self healing distribution automation scheme on the Isle of Wight", 20th International Conference and Exhibition on Electricity Distribution (CIRED 2009), 22 September 2009 (2009-09-22), XP055525945, Stevenage DOI: 10.1049/cp.2009.0603 ISBN: 978-1-84919-126-5

## Description

### Technical Field

This application relates to the control of an electric power distribution system, and more specifically to the use of intelligent autonomous nodes for managing and controlling the distribution system to improve circuit protection and allocation of system resources and ultimately service to end customers.

### Background

In general, a distribution system includes one or more sources connected through a distribution network to one or more delivery points. As the commodity (material or energy) is transported through the network, changing network conditions (e.g., load demand, source availability, etc.) or abnormalities (e.g., faults, loss of source, etc.) may develop that can lead to a disruption of the normal flow of the commodity or a loss of the commodity from the system. In order to help minimize the effects of these changes, a distribution system will typically have nodes at various locations throughout the network, which operate to monitor or control the flow of the commodity through the system. It is desirable to not only minimize the loss of the commodity when an abnormality occurs, but also to minimize the number of users who experience an interruption of the delivery of the commodity due to system changes. In order to reduce the loss of the commodity, the nodes in a system may have the capability to respond individually to system abnormalities without coordinating with other nodes. In such a system, nodes can prevent the commodity from flowing through the part of the distribution system where the abnormality exists. However, this system may interrupt service to more users than is necessary to isolate the abnormality from the distribution system.

Failures of the distribution feeder (faults) may occur due to downed power lines, excavation of underground cable or other causes and are typically detectable by sensing excess (short circuit/overcurrent) current, and occasionally by detecting loss of voltage. In distribution systems, it is sometimes the case that a loss of voltage complaint by the customer is the means by which the utility senses the outage, responding by dispatching a crew to isolate the fault and reconfigure the distribution system. The typical devices for isolating these faults are circuit breakers located primarily in distribution substations and fuses located on tap lines or at customer transformers. The substation breakers are generally provided with reclosing relays that cause the breaker to close several times after the breaker has detected an overcurrent condition and tripped open. If during any of these "reclosures", the fault becomes undetectable, service is restored and no extended outage occurs. Particularly on overhead distribution lines, temporary arcing due to wind, lightening, etc causes many faults. Thus, the majority of faults are cleared when the breaker opens and service is restored on the automatic reclose. Alternatively, after some number of reclosure attempts, if the overcurrent condition continues to be present, the recloser goes into a "lockout" state which prevents further attempts to clear the fault.

Other than manually operated switches, most distribution feeders have no other means to isolate a fault between the substation and the fuses, thus any failure of the feeder results in lengthy, costly, inconvenient and potentially dangerous outages. The primary exceptions to this involve the use of devices known as "line reclosers", "interrupters" and "automatic line sectionalizing switches" or "sectionalizers". These are automatically operated devices, well known to those skilled in the art, and are referred to categorically in this document as "fault isolating devices". The term "sectionalizer" refers to a specific family of automatic, fault isolating devices described below, while the terms "sectionalizing" and sectionalize" are used to describe the process of isolating a faulted section of line, which can be performed by all of the classes of switches described above.

The "line recloser" is typically a pre-packaged, version of the substation breaker with reclosing relay. Line reclosers typically consist of a fault-break switching device with integrated current sensing, plus a control enclosure containing fault detection hardware, control logic, user interface module, and battery-backed power supply. When placed on the distribution line between the substation and customer loads, a line recloser is typically set up with fault detection settings coordinated to operate before the substation breaker trips and to correspondingly prevent the substation breaker from tripping. This has the effect of reducing the number of customers affected by an end of line fault. On very long feeders, the more sensitive settings can be used to protect the feeder from faults of a magnitude too low to be detected reliably by the substation circuit breaker. Multiple line reclosers can be placed on a distribution line in series, although it becomes increasingly difficult or impossible to coordinate their settings such that only the nearest recloser on the source side of the fault operates.

The "interrupter" is typically a pre-packaged breaker and fault relay without automatic reclosing capability. Interrupters are used primarily in underground power distribution systems.

The "automatic line sectionalizer" or "sectionalizer" is typically a prepackaged combination of a load-break switch used in conjunction with a device known as a "line sectionalizer control". The sectionalizer senses current (and optionally voltage) such that the operation of the circuit and the source-side protective device can be monitored. The sectionalizer is configured to open its switch under certain circumstances when the circuit is de-energized after some number of pre-configured voltage losses have occurred within a brief time interval. The circumstances vary from product to product, but are always based upon sensing of conditions caused by faults followed shortly by voltage losses. Sectionalizers are designed to coordinate with the operation of the circuit's protective devices. Typical sectional izers are devices such as the Cooper Power Systems Sectional izer type GV or GW manufactured by Cooper Industries, Inc, or the Model 2800-SC Switch Control manufactured by S&C Electric Company.

Various types of distribution automation systems have been developed to isolate faults and reconfigure the distribution system to provide service to the maximum number of end users. These types of systems include various combinations of centralized controls, distributed controls and intelligent autonomous controls. In such centrally controlled systems, each node may communicate with a central control location which gathers information from each node and coordinates a system-wide response. The central controller typically maintains a detailed map of the system topology, and this map must be updated whenever the system is reconfigured or new nodes are added.

This can make such centrally controlled systems less reliable and more difficult and costly to implement and maintain. Additionally, for small systems with few nodes, the need to include a central controller can significantly add to the cost of the system. Furthermore, once an abnormality is rectified, the nodes typically must be transitioned to a normal state or to a specified state. Once the abnormality is corrected, it is generally desired to place the nodes in the original configuration or a specified configuration, at present this is typically done manually.

Intelligent, distributed control methodology is illustrated in U.S. Patent Nos. 6,018,449; 6,111,735; 6,243,244 and 6,347,027. While these systems may be generally suitable to perform their intended functions, it is advantageous to determine how to optimally reconfigure a complex distribution circuit while preventing overloading of any portion of the circuit; i.e. allocation of system resources. This becomes particularly difficult in circumstances where the circuit branches out (bifurcates) such that multiple load-side switches could attempt to simultaneously pick up additional load and overload the circuit.

EP2056424 discloses a system for controlling a multi-feed power distribution network. The network includes a first network sector that includes a first plurality of devices connected to a first power source and a second network sector that includes a second plurality of devices connected to a second power source. The system includes a first controller and a second controller. The first controller is configured to control operation of the first network sector and exchange data with the second controller. The second controller is configured to control operation of the second network sector and exchange data with the first controller.

US2008/0225452 discloses an apparatus for restoring power to loads connected to a feeder powered by a power source. The feeder is provided with a plurality of switching devices and a master electronic device which is in operative communication with the switching devices and has a plurality of power restoration plans stored therein. Upon occurrence of a fault in a zone of the feeder, the identity of the switching device which is closest to and upstream from the faulted zone relative to the power source is used in order to select a power restoration plan and restore power to some or all the loads connected to non-faulted zones of the feeder from one or more additional feeders.

### Brief Description of the Drawings

Fig. 1 is a graphic illustration of a distribution network.
Fig. 2 is a table listing Netlist components.
Figs. 3a - 3i illustrate an example of service restoration in response to a first fault type in a commodity distribution system in accordance with a first mode of operation.
Figs. 4a - 4j illustrate an example of service restoration in response to the first fault type in a commodity distribution system in accordance with a second mode of operation.
Figs. 5a - 5h illustrate an example of service restoration in response to a second fault type in a commodity distribution system in accordance with a first mode of operation.
Figs. 6a - 6k illustrate an example of service restoration in response to the second fault type in a commodity distribution system in accordance with a second mode of operation.
Figs. 7a - 7f illustrate an example of service restoration in response to a third fault type in a commodity distribution system in accordance with a first mode of operation.
Figs. 8a - 8c illustrate an example of service restoration in response to the third fault type in a commodity distribution system in accordance with a second mode of operation.
Figs. 9a - 9e illustrate an example of service restoration in response to a fourth fault type in a commodity distribution system in accordance with a first mode of operation.
Figs. 10a - 10b illustrate an example of service restoration in response to the fourth fault type in a commodity distribution system in accordance with a second mode of operation.
Figs. 11 a - 11o illustrate a post restoration load shedding/load balancing process.
Figs. 12a - 12h illustrate a system design, configuration and specification process.
Figs. 13a - 13c illustrate a site acceptance test tool process.

### Description

This application describes a system for automated reconfiguration of an electrical power distribution system, according to Claim 1. The following description is presented to enable any person skilled in the art to make and use the invention, and is provided in the context of particular applications and their requirements.

Further, while illustrative electrical systems utilize switch locations at various nodes and locations, it should be realized that in particular embodiments, these illustrative switch locations are any one of a variety of devices including reclosers, breakers, sectionalizers or other protective devices.

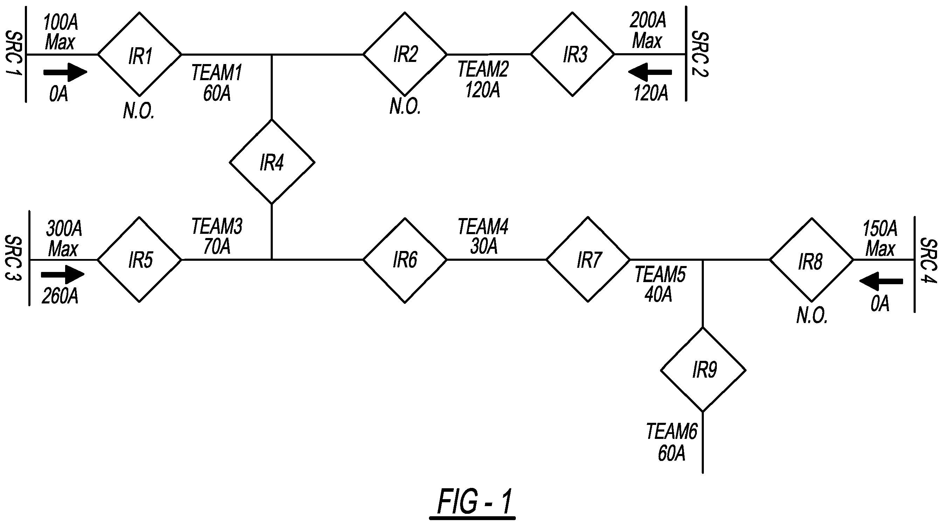

Fig .1 shows a simplified view of a portion of an exemplary electrical power distribution system that can be controlled by the present invention and further illustrates the reference convention used throughout the drawings. Such a network may include a plurality of nodes or sources (SR#) and a plurality of nodes or switches (IR#) and suitable interconnections, e.g., wires. The sources (SR#) may be central or distributed generation stations, storage stations and combinations. The switches or nodes (IR#) may be normally open or normally closed switches, protection devices such as breakers or fuses, sensing devices, and combinations thereof for controlling the flow of the commodity within the network. The network provides distribution of the commodity to end-users (e.g., factories, offices, homes, etc. not depicted). In the network depicted in Fig.1, the end user would extend laterally from the lines interconnecting the sources and nodes. Each of the sources and nodes may incorporate processing capability, e.g., a processor, with associated memory for retaining one or more control programs and data. The processor is operable in response to a control program and available data to control operation of the source or node to facilitate the efficient distribution of the commodity. Each of the source and nodes may also incorporate one or more forms of communication capability, including wired or wireless communication devices. For example, each of the sources and nodes may be capable of linking to a wireless communication network using a suitable network protocol such as 802.11-based standards, linking to a power line communication network via over-power-line protocol, using radio communication in the unlicensed frequency spectrum, using other communication techniques and protocols and, of course, various combinations thereof.

In accordance with the herein described embodiments, at least selected ones the sources and nodes of the distribution network operate autonomously, i.e., with distributed intelligence.

For this type of interdependent wide area networked process and control system, it is beneficial to implement and maintain local copies of a replicated database containing, for example, lists of all system devices, their static resource capabilities, their real-time resource utilization, and a table describing the interconnection of all system devices. A copy of this database, herein termed the Netlist. may exist at key intelligent, "Netlist enabled", controls in the interconnected system. The real-time dynamic parameters of every device in the system may be constantly updated via a communications infrastructure. Therefore each Netlist enabled device can always have the real-time status and available resources of every other device in the control system.

Individual interdependent wide area networked process and control devices can be greatly benefitted in their efficiency, effectiveness, and capabilities when they have ready access to the status and resources of the other process and control devices in their system.

Given each such device maintains a database of the real-time status and available resources of every other device in the system it is possible to quickly modify system function due to remote changes in system status and resources.

Specifically, for various network types, such as, without limiting the generality of the types of networks, networks associated with distributed intelligence, power distribution resource management systems the Netlist enabled devices facilitate:
1. Each device being aware of changes of both system state and available resources allowing it to rapidly transfer load to the next best available alternate source of power as in the cases of circuit overload or loss of primary source. The system is able to intelligently choose the optimal alternate source to transfer load to, or in the case of an overloaded circuit with no possible alternate source, which load would be the least critical to drop.
2. Typical power distribution systems contain multiple sources, with numbers of closed, series connected switching devices and a smaller number of open switching devices, known as tie points that can be closed in to feed circuit segments from alternate sources should a primary source become unavailable. The Netlist enables the rapid restoration of power to line sections that are load side of a compromised source or circuit segment. This feature is called herein Close One Restore All or (CORA). The Netlist permits every Netlist enabled device to know the real-time status and available load of all potential alternate sources and therefore the tie switch that is the optimal one to request to close and restore power. This can be done without the need to have any intermediate switching devices open significantly reducing the time required to transfer load to an alternate source.
3. The Netlist also enables series connected fault interrupting devices to coordinate optimal Time Current Curve (TCC) selection. The TCC of a fault interrupting device tells the device how long to tolerate a specific overload condition before opening up and breaking the overload. A low overload state can be tolerated for longer period than a high overload state. Series connected fault interrupting devices must have their TCCs coordinated between devices in such a way that only the device source side of the overload opens to protect the circuit leaving all others devices closed. Which TCC to use can be determined at each fault interrupting device due to the real-time information contained in the Netlist. Some of the information in the Netlist used to determine TCC selection are:
   a. The static characteristics of the circuit including inductance and capacitance of the lines as well as the existence of fuses that the customer may want to protect.
   b. The series connection of all fault interrupting devices and where each device is in the protection chain.
   c. The direction of current flow since the device can analyze the interconnected devices to determine where and on which side the source is located.
   d. The present load on each series connect circuit segment.
4. The Netlist enables the management of system resources on a load segment by load segment basis in a way that will affect global distribution system effectiveness and efficiency as follows:
   a. Autonomous ability to take customer elected loads off grid during peak power usage periods.
   b. Ability to manage and monitor distributed energy storage.
   c. Ability to manage customer owned power production such as diesel generator sets, solar panels and wind turbines.
   d. Ability to manage phase correction to maintain optimal power factor and minimize line losses.
5. The Netlist facilitates the rapid issuing of resource rights (contracts) by an alternate resource when an alternate resources is required due to the over taxing a primary resource or loss of primary resource.
6. The Netlist provides the information required for an orderly, coordinated return to the normal operational state of the process and control system after an event that required a temporary re-allocation and reconfiguration of system resources.
7. The Netlist provides the ability for the distributed system to automatically account for the addition of new devices and the removal of existing devices (whether planned or due to trouble) so that little or no interruption of the automation system is experienced.

The Netlist, database, utilizes a communications medium to enable its value as an aide to process and control.

In one example, the Netlist consists of a distributed dataset that is uniquely suited to a distributed intelligence system such as IntelliTEAM SG available from S&C Electric Company, Chicago Illinois. Other examples of a Netlist consist of a single dataset at a central processor. This centralized form of Netlist does not readily facilitate the fast localized parallel processing as is possible in a distributed system. The distributed Netlist therefore has potential advantages in reliability as well, having no central point of failure.

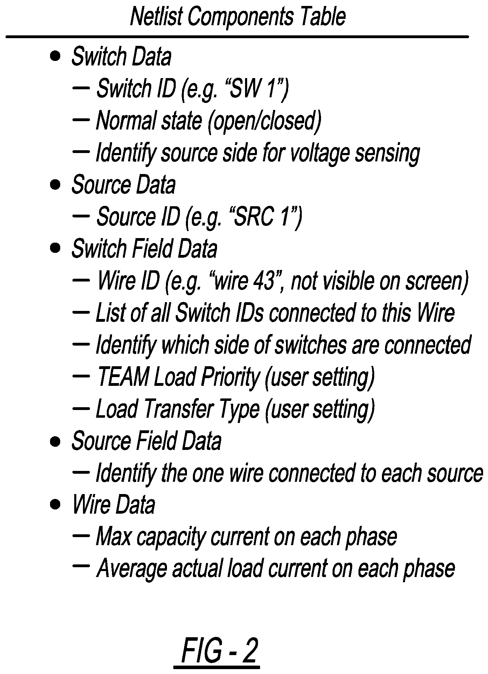

As illustrated generally in Fig. 2, the Netlist consists of a list of system components and their settings and parameters as well as a list of the interconnection relationships of the system components one to another. Each system component listed in the Netlist has parameters associated with it that can be either static or dynamic. Static parameters generally represent the initial or quiescent configuration state of the system. Dynamic parameters may change real-time due to system events or changes in configuration parameters resulting from the user's desire to alter system topology or operation. A component can be either real or virtual. A real entity would be something such as a switching device or conductor. A virtual entity is a system object that is not directly tangible. For example, a set of local settings that applies to a number of real devices such as Team settings or TCCs for fault interrupting devices are virtual entities.

The interconnection relationships are listings of devices with common connection, such as all devices connected to the same conductor in a power distribution system or all devices connected to the same fiber optic cable or devices all on the same Ethernet subnet or all devices providing resources for a specific purpose or to a specific consumer.

The enabling communications infrastructure can be of any type and may include serial, wired or wireless Ethernet, optical fiber, radio, telephone, etc. Each "Netlist enabled" device is able to communicate changes of its status and resource availability to every other "Netlist enabled" intelligent device in the system via the communications infrastructure. This allows each "Netlist enabled" device to maintain its copy of the real-time status and resources of the Netlist component's dynamic parameters that it has received over communications.

Generally, the Netlist approach to commodity distribution system infrastructure includes: load Balancing; load shedding; Volt/Var management; control of discretionary customer loads; management of energy storage systems; management of distributed energy production; local TCC selection; return to normal manager; close one restore all (CORA); self healing communications system; non-operational device reporting and loss reduction optimization.

The features of Netlist and other distribution network functionality enabled by the Netlist are demonstrated by way of several examples. While the functionality is enable by the Netlist, other means of enabling the functionality can be envisioned and employed. Therefore, while the examples utilize the Netlist in their description, this, again, is done to demonstrate one way of enabling the described functionality.

The following is a brief summary of features that are possible in an automated distrbution system that incorporates a Netlist architecture, and are described by way of example in more detail below:
- **Close-One-Restore-All (CORA)** - literally meaning to close one tie switch that will restore service to all unfaulted circuit sections at once; however, generally can mean closing one or several switches to affect the result of restoring all or most unfaulted circuit sections. In response to a fault, only switching points open that are necessary to isolate the faulted section as opposed to opening all switches and sequentially closing the opened switches to restore service to all but the unfaulted section.
- **Load Balancing/Shedding** - a result of rapid, CORA or CORA-like service restoration is the possibility of moving a large amount of load to a single alternate feeder. Reconfiguration can occur to distribute load, to make optimum use of distributed generation, storage and other resources. If necessary non-critical load can be managed.
- **Permanent Circuit Reconfiguration** - is the possibility to return to a new normal configuration. Utility engineers can use this feature when load growth, seasonal changes, or facility changes require circuit configuration to be modified permanently or for an extended period. • Intelligent Relay TCC Selection - given the Netlist and circuit segment characteristics it is possible to have each device intelligently select the protection curve that will keep series devices coordinated, even after multiple successive configuration changes.
- **Distributed Generation/Alternate Energy Sources/NAS Battery/Islanding-**coordinated transitions between various energy sources, restore service during circuit events using these resources, and manage an islanded portion of system when no other source is available.
- **Testing/Setup/Analysis Application** - pre-installation testing in the lab and post-installation site acceptance testing; automated creation of setup configuration files and test scripts; analysis of test results and real field operation through reports and Instant Replays.

Addition of an agent based approach, with distributed intelligence and peer-to-peer communications, along with Netlist further enable the herein described new functionality. A new and very important component is being added though, the Netlist. The Netlist is a key to moving from a line section view to a much wider distribution system view.

Referring again to Fig. 2, the Netlist is a database representation of the distribution system distributed to all devices in the field. It contains static configuration data, real time data, and it contains an overall connectivity map. From within the memory of any one Netist enabled field device a process can query or search through all devices in electrical connectivity in order to find desired data.

An example of the use of the Netlist is CORA, rapid self-healing or generally a process by which a switch isolating a fault near the source end of a circuit can search much further out the circuit to find an appropriate alternate source tie switch (checking loading, capacity, and state), and then directly address that switch to request restoration. That is, the switch can search through the Netlist data to identify a resource or resources that will best provide service restoration.

The Netlist may be created using a PC-based management application that allows graphic circuit creation and component definition as well as address and interconnectivity data entry. Once created, suitable communication methods, such as network propagation methods, may be used to distribute the Netlist to each Netlist enabled device in the distribution network. Other methods, such as automated creation of the Netlist from distribution system definitional data can be employed.

To facilitate creation, distribution and updating of the Netlist, a network component, e.g., a Runner, can be defined. The Runner is an entity that is created on an interval basis (possibly once a second) at each source switch device and is transmitted to every other switch device in turn along the circuit until it reaches the opposite source. Along the way the Runner collects changed data at each device and hands it off to every other device. Since a Runner is created at every source device it follows that Runners transverse the circuit in at least two directions at once in an effort to keep all data up to date. Also, since there are usually more than two sources, Runners may divide at branches in the network to follow multiple branches of the circuit. While following the electrical path may be efficient, there may be more efficient ways the Runner(s) may transit the network. For example, Runners may follow defined grids or other rules based on geography, communications or an algorithm. The Runner also has the capability to provide real time view of system variables as the same are collected within the system, and show actual and changing switching conditions as the system reconfigures. It also can collect and report loading data. The Runner provides the collected data to each node within the system, and the data may be stored within the Netlist and/or other memory at each node.

A robust communication protocol as a generic data transporter is required the provides sufficient frame size, efficient header and object definition, efficient error, CRC checking, write functionality and dynamic communication media adaption is preferred. A communications protocol that specifically transports generic data between peer devices improves data propagation rates. Such a custom protocol can multiplex on the same channel with DNP, much the same as "Local protocol" multiplexes with DNP. This can eliminate the need for redundant parallel communications systems. While the DNP3 protocol may be limited in offering the above feature, it may be possible to adapt it to meet these requirements. It may further be possible to define a new protocol, e.g., a "DNP4"or adapt another existing protocol such as the IEC 61850 protocol.

Implementation of the herein described functionality does not require but does require a suitable peer-to-peer communication protocol such as defined in the aforementioned patents and pending applications, DNP or suitable adaptations of the same or other suitable communication capability such as the SpeedNet radio system available from S&C Electric Company.

The mobile autonomous software agent architecture may be implemented using existing or newly developed standards. One possibility for an open, existing standard is JADE (Java Agent Development Framework). According the website

(http://jade.tilab.com/) "JADE is free software and is distributed by Telecom Italia, the copyright holder, in open source software under the terms of the LGPL (Lesser General Public License Version 2). It is a software framework that is fully implemented in Java language. It simplifies the implementation of multi-agent systems through a middle-ware that complies with the FIPA specifications and through a set of graphical tools that supports the debugging and deployment phases.

It may be desirable to use or create an open standard for agent containers in field devices. Such a general framework may allow implementation on a broader array of devices. Such a framework may be, at a high level, functionally similar to the browser/DOM/Javascript model on a PC. A mobile agent would have access to facilities at a field device through a closely controlled process similar to how a web page has access to PC facilities through a web browser.

Still another possibility is to create a virtualized EOS. Essentially this means to create a CCP hardware emulation layer on a PC so that the distributed network operating system and applications can run in a virtual CCP environment under existing operating systems such as Windows or Linux. This method has added benefits in creation of PC based test and simulation programs. The ability to run any number of instances of devices in one box could be very powerful. Field communications of any quality and form could also be simulated through inter-process communications.

While details of existing distribution automation, fault isolation and service restoration technology is described in the above-referenced patents and patent application, a brief background and definition of terms is useful.

As described in the above-reference patents and patent applications, existing distribution automation functionality is based on three key building blocks:
1) Node Profiles - knowing what data and services a specific node can provide, and the role of that node within the system.
2) Distributed Execution - allowing logic to execute at node locations, redirecting itself to other node locations to continue execution, based on the need for specific data and services.
3) Functional Coordination - insuring that numerous independent distributed processes ultimately work together to perform the job of the overall system.

These building blocks are implemented using:
1) Shared Distributed Database
2) Shared Distributed Execution Stack
3) Peer-to-peer Communications
4) Mobile Autonomous Software Agents
5) Multi-level Rule Based Algorithms

The described distribution automation systems are:
1. Scalable
2. Flexible
3. Coordinate large system events
4. Relatively easy to understand (at a high level)
5. Handles loading/capacity
6. Works with many types of devices
7. Self organizing and self coordinating

It should be understood that the logical operation of the distribution automation system is based on the concept of the line section rather than the individual physical devices that surround the section. Initially, in keeping with the "Team" analogy, the line section was called the "Field". The Field is bounded by Team Members (switches or nodes on the line section), and the Coach moves freely between the members executing tasks. With this in mind the execution of logic is no longer associated with a single device, but rather a number of devices within the Team, each becoming a temporary container for running the Field/Coach process.

The Coach is a software agent. In fact it can be considered a Mobile Autonomous Software Agent. It has the ability to send itself to any location within its Field, execute the code it deems necessary, and cause physical action to be taken in real-time. The Coach does not carry the executable code with it when it travels. Instead it carries an execution stack. The executable code is actually housed in the Team Member containers, presently identical in every container. This was done for communications efficiency.

For ease of discussion the Coach carries the following items:
- the Clipboard (the execution stack)
- the Briefcase (the distributed database)

When the Coach arrives at a Team Member it unpacks the Briefcase, updating the local database information, and starts executing the tasks (logic/code) on the Clipboard from where it left off at the last Team Member. The Coach can dynamically modify the execution stack based on the local conditions, or events received from elsewhere, and may stay at this Team Member for some time, or may move off to another Team Member, all based on those present conditions and events.

The events just mentioned are components of the process. Events represent changes that occur in real-time throughout the Team, and are distributed to all Team Members with the intent of quick and decisive action by the Coach. The Coach collects events at every Team Member and converts those events into tasks that are executed and can modify the overall execution of the Field process. If an event was received from another Team Member, and must be executed at that Team Member, the Coach will pack up the Briefcase and the Clipboard and will transmit itself to that Team Member for continued execution.

Every switch location can be a member of from one to several Teams. The number of Teams depends on the type of device and the location of that device in the circuit. Typically the installation will be a single. These devices can be a member of one or two Teams: two if this location is mid-circuit; one if this location is either at the beginning of a circuit, or represents the last switch on a radial feeder.

Allowing every switching location to be a member of multiple Teams means that there are several Coach (or agent) processes running in parallel in each control. Each Coach process is completely independent. Management of the Coach life cycle, the events, the tasks, the Briefcase (database), and the Clipboard (execution stack), are unique to each active Team. In fact, a strict rule may be employed preventing Coach processes to directly interact or share data. Another layer of software, known as the Player, is used to facilitate this interaction.

An aspect of the load transfer and circuit reconfiguration process is coordination. This would be coordination of many independent devices and processes over a wide geographic area. The Player is a key component of this coordination because the Player enforces a "Two Coach Rule" of the distribution automation system. The Two Coach Rule states that for any critical operation, such as closing a switch, both Coaches must be present and must agree (through a number of details) that the switch can be closed. The Player is also allowed visibility into Field data for all the Teams at that location. The Player is a static entity that is normally sitting idle. When necessary Coaches request action from the Player (such as closing a switch) by placing tasks on the Player's single execution stack, and the Player can affect the action of each Coach by placing tasks back on the Coach's execution stacks directly, or by creating events that are sent out to reach the Coach.

The Player also interacts with a higher level process called the Contract Agent. The Contract Agent is a single static process that exists at each Team Member, and has the responsibility to request, verify and maintain contracts. Contracts are a configurable feature that are designed to guarantee reservation of portions of capacity available from an alternate source. Primarily intended for bifurcated circuit situations where multiple contingency events could otherwise result in overload conditions, the Contract Agent process insures adequate capacity exists from the alternate source itself prior to restoration.

The foregoing described existing distribution automation restoration processes may be continued in the network and may even continue to be the primary response to outage events (due to the ability to coordinate numerous alternate sources) within the distribution network. In this regard, the distribution system is multi-mode having at least a first mode of operation and a second mode of operation. The first and second modes of operation may be different modes of operating and controlling the commodity distribution system, adaptations of existing distribution restoration processes or CORA and CORA-like processes and combinations thereof. More than two modes of operation may be provided. The modes of operation may be user selectable, dynamically selectable or selected in real time in view of current system conditions, such as availability and capacity of sources, or the like.

As noted above, methodology of CORA is in intent to close one switch to restore all load, but generally is employed to open a minimal number of switches to isolate a fault and to close a minimal number of switches to restore service. While this method bypasses many of the features of existing restoration schema, CORA can dramatically decrease restoration times. When CORA is enabled but unable to restore load though, possibly due to inadequate capacity or other trouble, a fall back may be to utilize the existing restoration operations. Hence, in the present invention, CORA is the first operating mode and the existing restoration operations are the second operating mode employed as a fall back.

CORA is similar to the Contract Agent described in the above-referenced patents and patent applications in that it, in one implementation it is a single static process that exists at every network node (Team Member), it interacts with other CORA agents to effect an operation, and it is a higher level process that interacts locally with a node (the Player). CORA is activated at the downstream isolating switch to find a tie point switch, and CORA logic also executes at the tie point switch when a request is received. It is programmed as an application task and is running in all enabled nodes (team members) at the prescribed interval all the time.

The interaction of CORA begins at the Coach level when a fault isolating event occurs. The isolating event itself is based on protection settings, sectionalizing settings, or if necessary (on the downstream side of the fault) the operation of the Coach. If configured to do so both the source side switch and the load side switch can trip open at the first indication of fault allowing for a very short outage for customers on the unaffected portion of the circuit. More likely though the devices are coordinated in such a way that the downstream switch will be opened only after the upstream switch locks out and the Coach requests the open operation. Note that a further option could be for a communication to cause the downstream unfaulted switch to open after the first trip of the upstream protective device even though the upstream device will continue to reclose and test the line. The normal operation of existing distribution automation systems after the downstream switch opens would be to open all other downstream switch locations (if they didn't open on their own) in preparation for closing one switch at a time restoring service one line section at a time back to the isolating point. With CORA enabled this functionality is intercepted prior to opening any other switch. The Coach logic is instead redirected to a new task to initiate CORA. However, if CORA is unable to restore load the Coach remains in a state fully prepared to restart operation according to the existing logic.

The enabled state of CORA may be based on both user configuration and internal preparedness. First, CORA may and typically will be user selectable. It is also selectable on a switch-by-switch basis so that this form of restoration can be used only where appropriate (such as where plenty of alternate source capacity is available). Second, CORA requires that the associated Team (or Teams) be in a ready state with no error conditions. If CORA detects trouble it will use Coach event processing to inform the Coach that CORA should not be used at this time. CORA also uses Coach event processing to put CORA back into an active state.

CORA may not be active after startup until all Team functionality is ready. After an isolating event, with CORA active, the Coach logic is redirected to a new task as mentioned above. This new task signals to the Player layer in the same way the Player is signaled to operate a switch. The Player layer has direct interaction with CORA rather than the Coach in order to coordinate the possible multiple Coach signals. This signaling is in the form of requested Player tasks. After requesting the Player task the Coach expects to see a signal back indicating the status of the CORA initiation. If successful the Coach can continue with other branches of the same circuit, if they exist, either starting CORA or alternate restoration as configured. If initiation is not successful the Coach will immediately begin alternate restoration at the location.

The Player task for initiating CORA will directly call a CORA initiate function. The Player will pass CORA the two Fields associated with this Team member location. The Player will expect a return value of whether CORA will attempt to restore load. If the response is good the Player will enter a waiting state, expecting to eventually receive an indication of final outcome. If either the initiating function call returns not good, or the eventual outcome is negative, the Player will inform the Coaches of the trouble.

The initiating CORA function will interact with the Netlist to find an appropriate tie switch to close. CORA passes to the Netlist the Field identification of the Field on the downstream side of the switch location (i.e. the last section of the restored circuit if the tie switch is able to close). The Netlist uses this as a starting point to search for a tie switch. The response from the Netlist is an RTU address, switch position number, available capacity and trouble indication. CORA can then check for a valid tie switch with adequate capacity and no trouble. If all is well the CORA initiating function will register this longdistance peer device with suitable messaging, e.g., DNP, and request that a CORA message be delivered to this device. CORA at this isolating switch will then enter a waiting state.

A safety timer may also be started when the CORA message is sent. If this timer expires prior to receiving confirmation of tie switch operation then CORA will stop execution and return control back to the Player and the Coaches.

Also CORA communication may use the same facilities as all other parts of the existing distribution automation system. Messages are sent, received and managed through a combination of IntelliTEAM functions, and at a lower level, communication functions. The CORA message contains at least:
- requesting switch RTU address (destination for the return message)
- tie switch RTU address
- tie switch position number
- field number of original request
   circuit load to be restored
- present state of CORA
- present status of the CORA process
- time of the CORA request

CORA at the tie switch is continually poised to take action whenever a CORA request is received. At the tie switch CORA will again check the applicability of this location for restoring the load. This is necessary in case local data has changed since the last time the Netlist at the requesting location had been updated. If this location is able to restore the load CORA will ask the Player at this location to close the tie switch. Here again the Player is the central coordinating point for local operations.

Whether this location was able to restore service to the circuit or not, CORA will address the original requesting switch location and send a status message back. CORA at the requesting location will receive the message and inform the Player and the Coaches appropriately, allowing the process to stop, or taking further action to restore load.

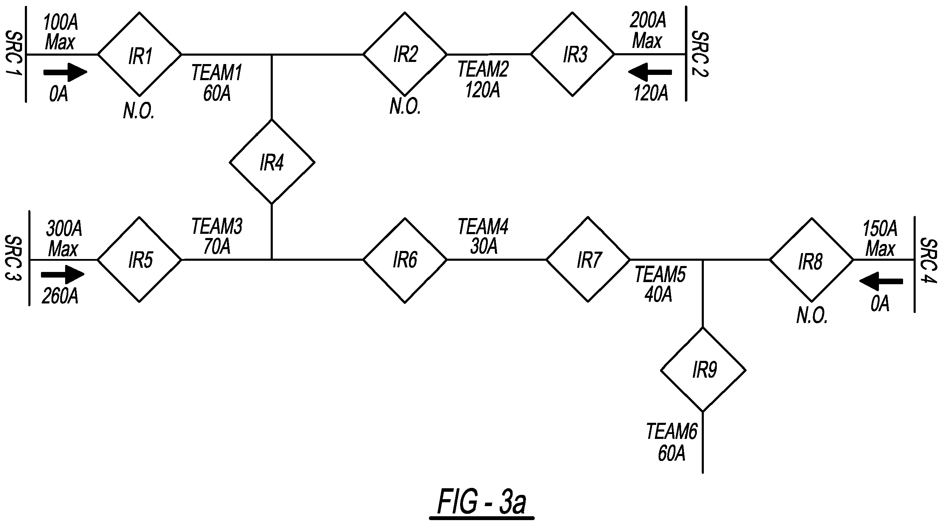

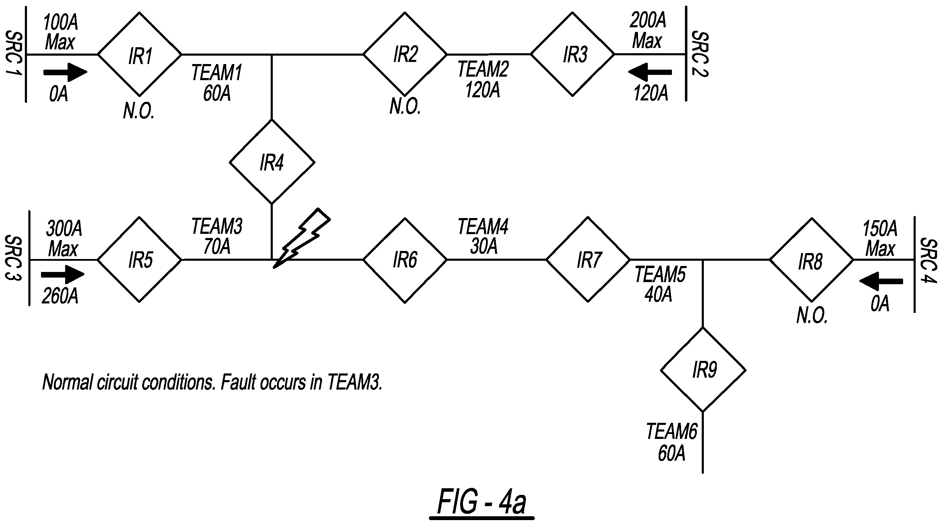

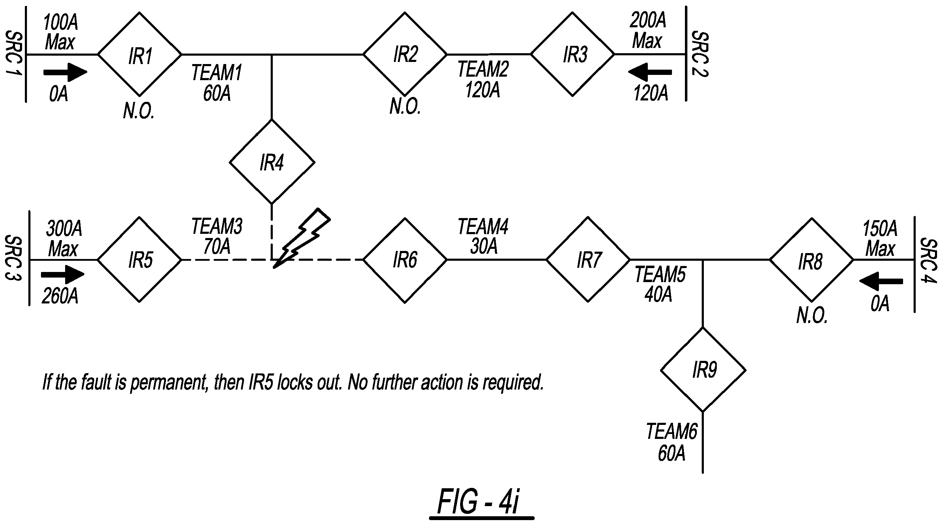

With reference to Figs. 3a - 3i and Figs.4a - 4j, a first example of CORA operation, a first mode of operation, as compared with existing restoration operation, a second mode of operation, is provided in connection with a commodity distribution system.

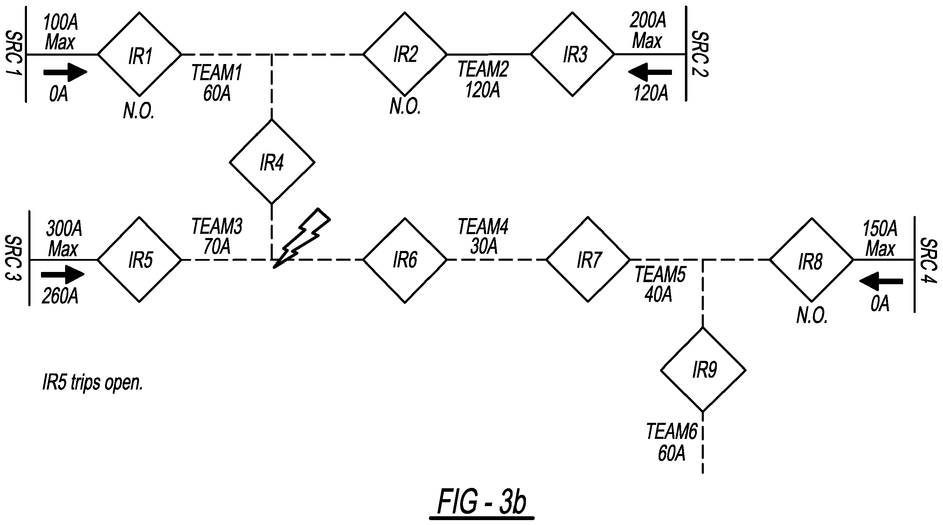

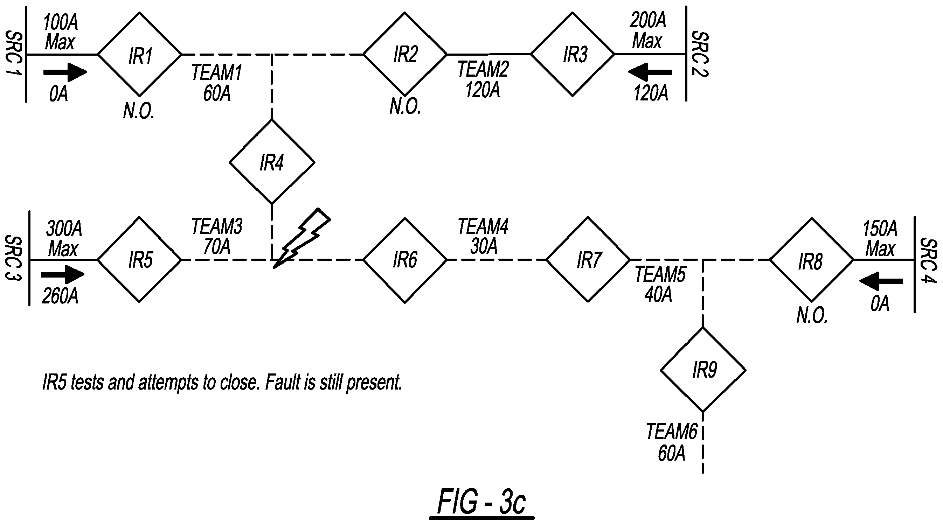

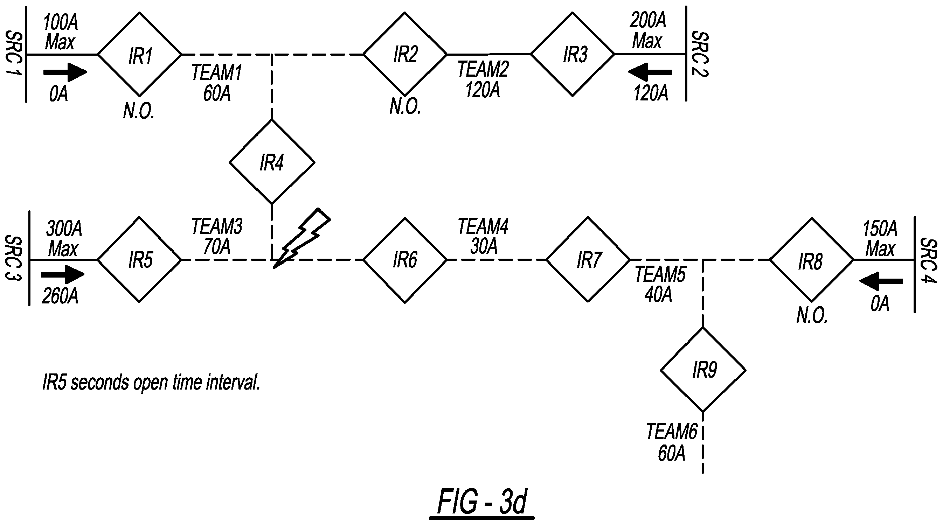

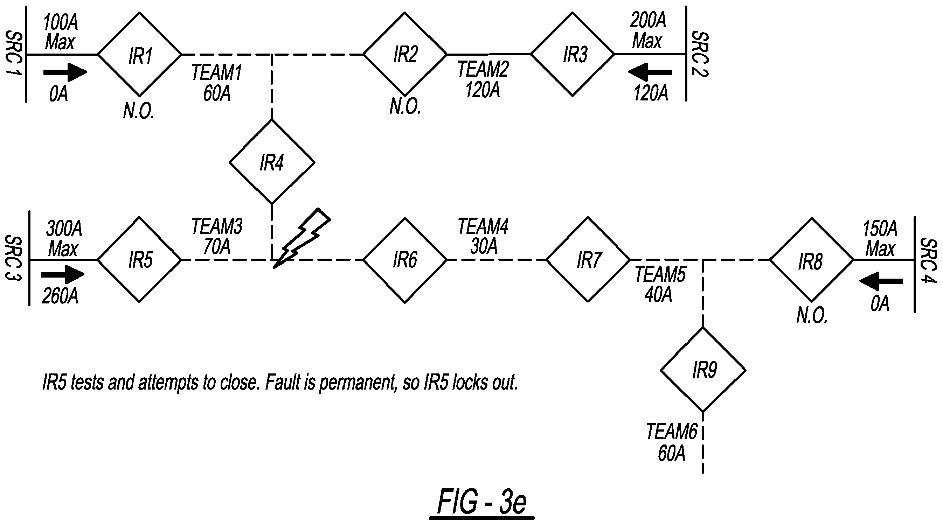

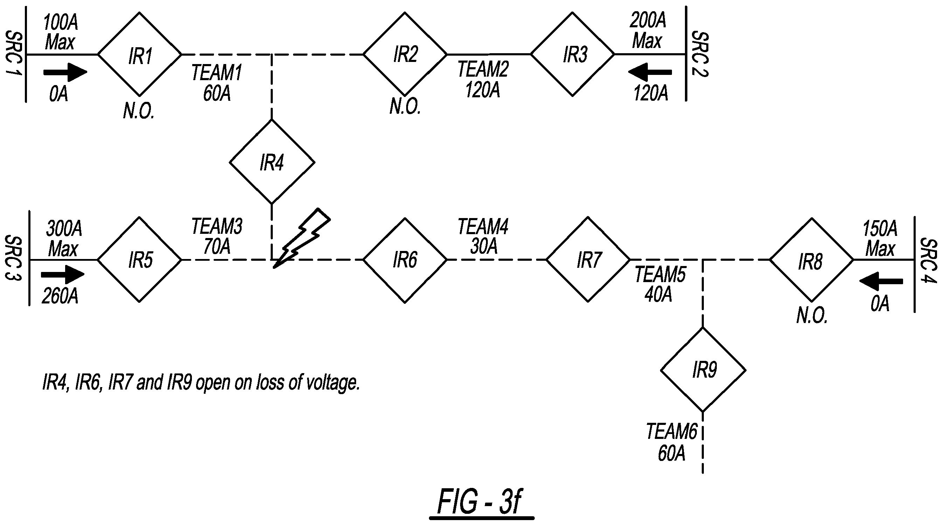

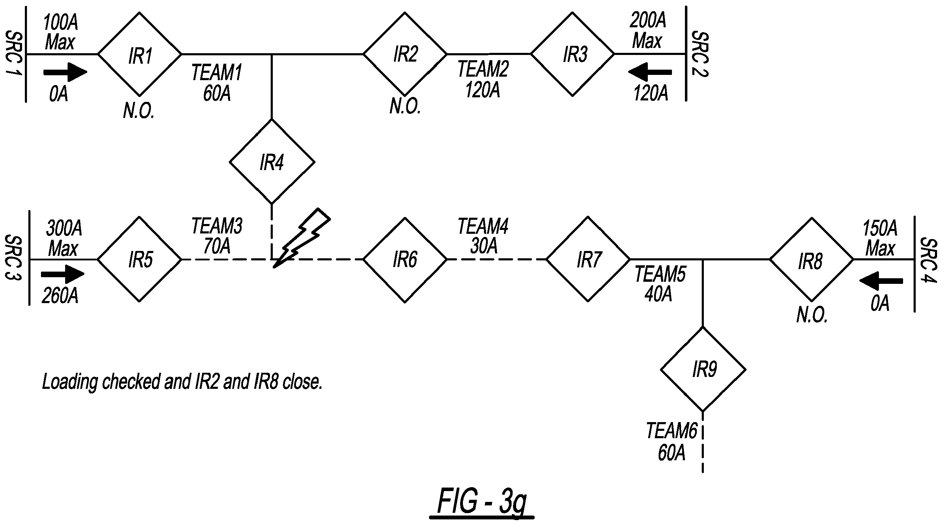

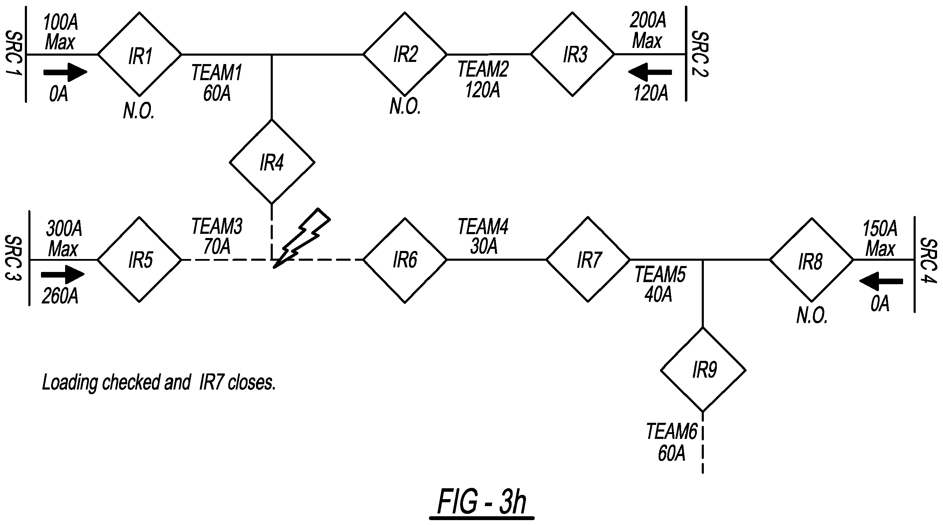

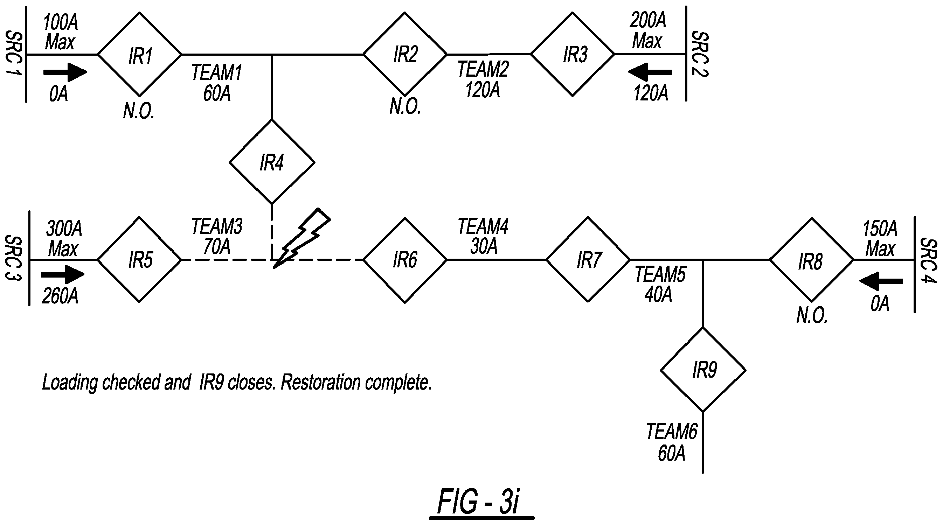

Figs. 3a - 3i illustrate restoration operation according to a first mode of operation in response to a fault of a first type. As shown in Fig. 3a, there are normal circuit conditions when a fault occurs in Team 3, the interconnections between nodes IR4, IR5 and IR6. As shown in Fig.3b, the switch at IR5 operates and opens to isolate the fault. Fig. 3c illustrates the switch at IR5 initiating a closing operation, for example using a pulse testing methodology to test whether the fault still exists before attempting to close, and Fig. 3d illustrates the fault being persistent and the switch at IR5 locking our, Fig. 3e. On loss of voltage, the switches at nodes IR4, IR6, IR7 and IR9 open, Fig. 3f. The tie switches at IR2 and IR8 are evaluated for loading condition, and the respective switches are closed, Fig. 3g. Next, loading is evaluated at node IR7,and its switch is closed, Fig. 3h. Loading is then evaluated at IR9, and its switch is closed completing restoration around the fault at Team 3, Fig. 3i.

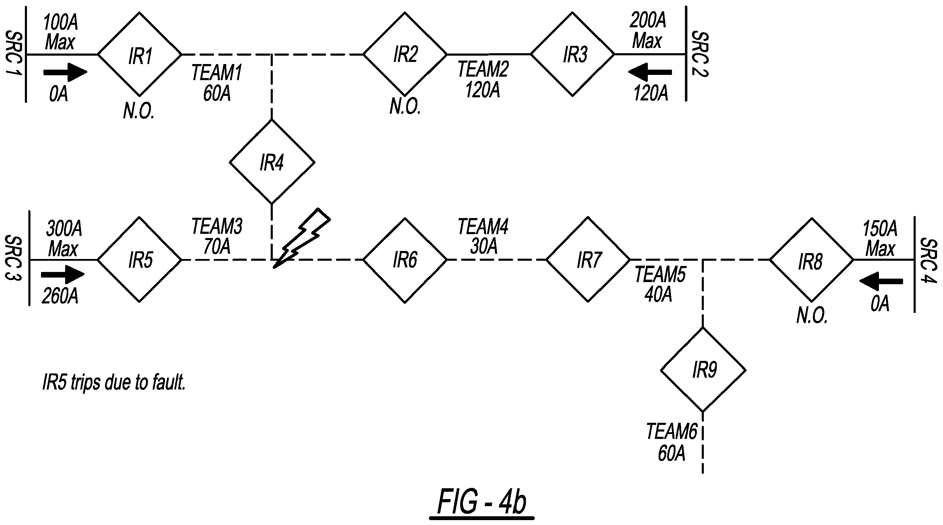

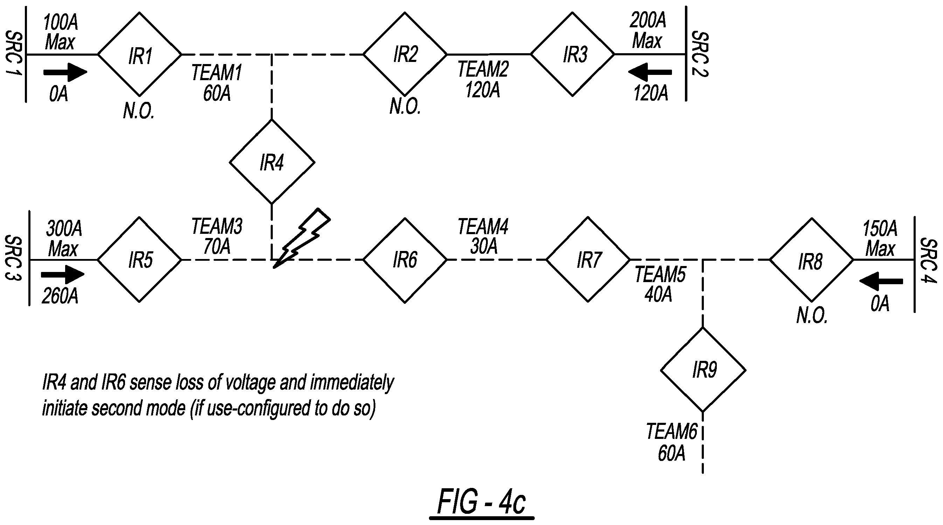

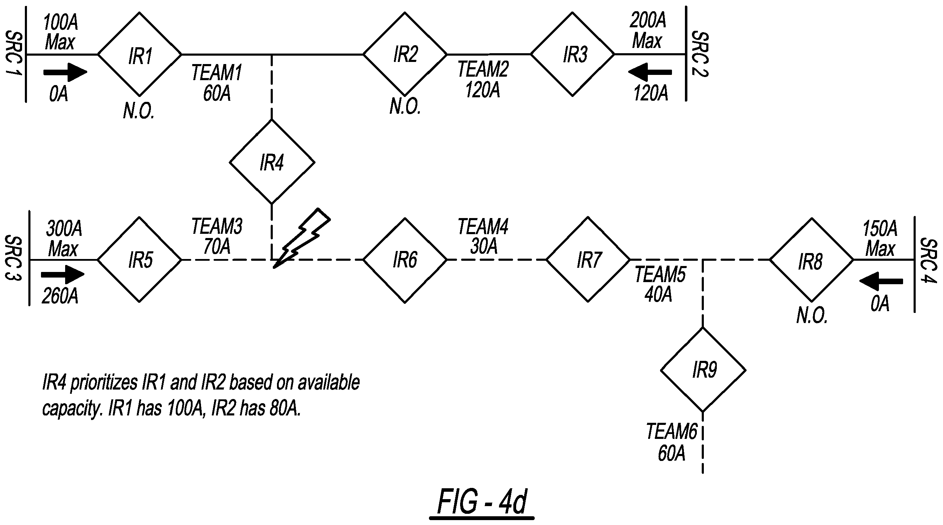

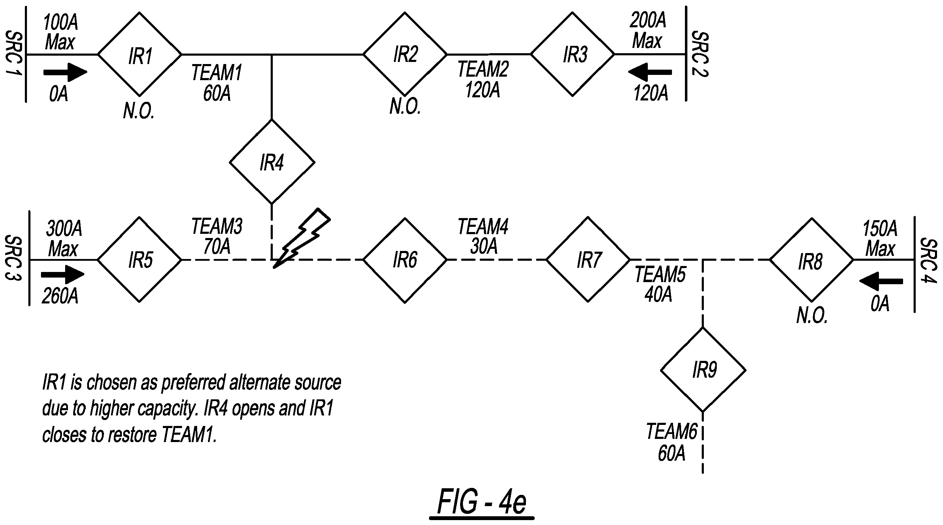

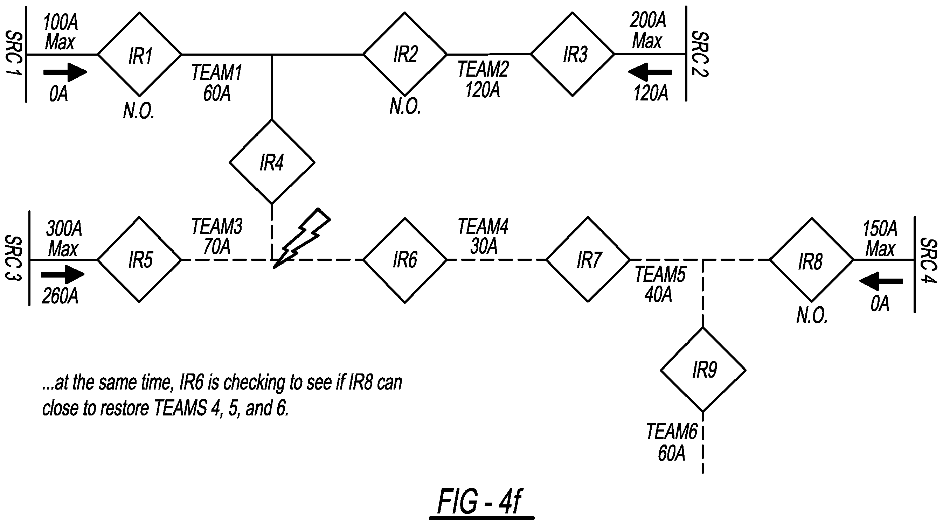

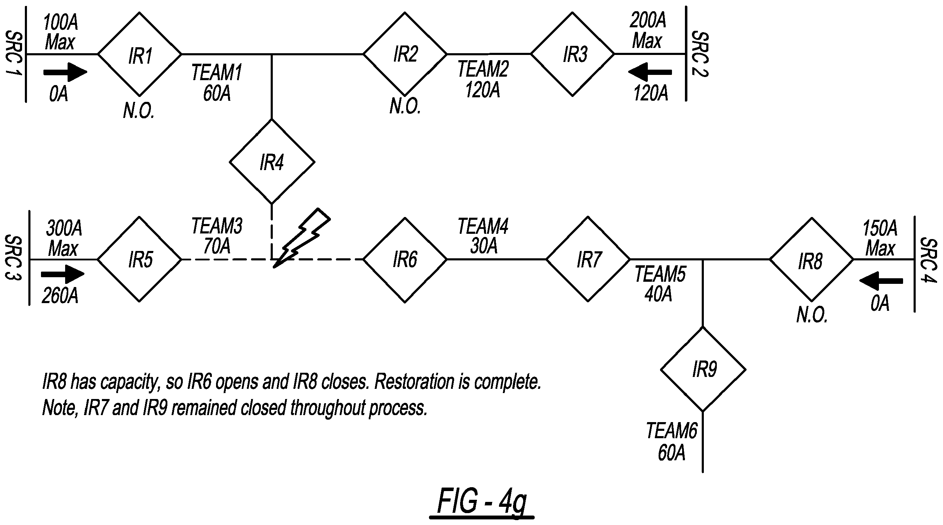

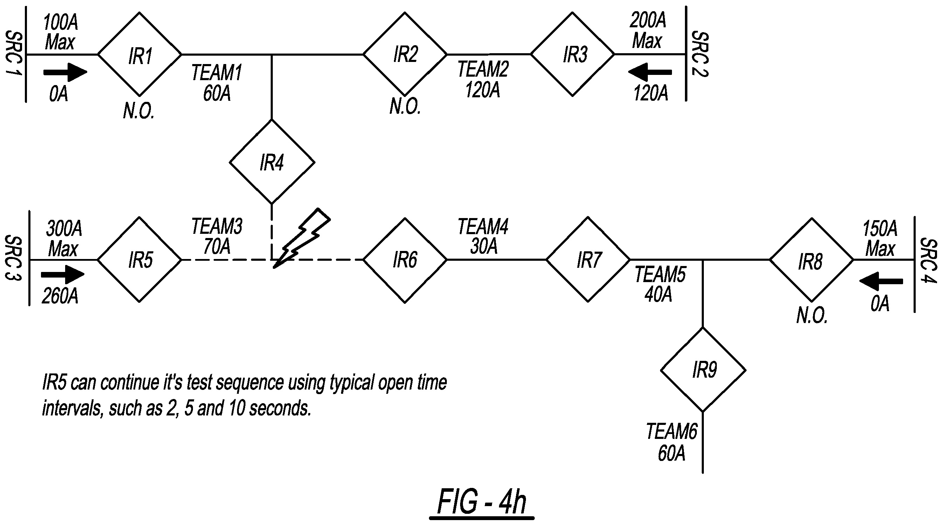

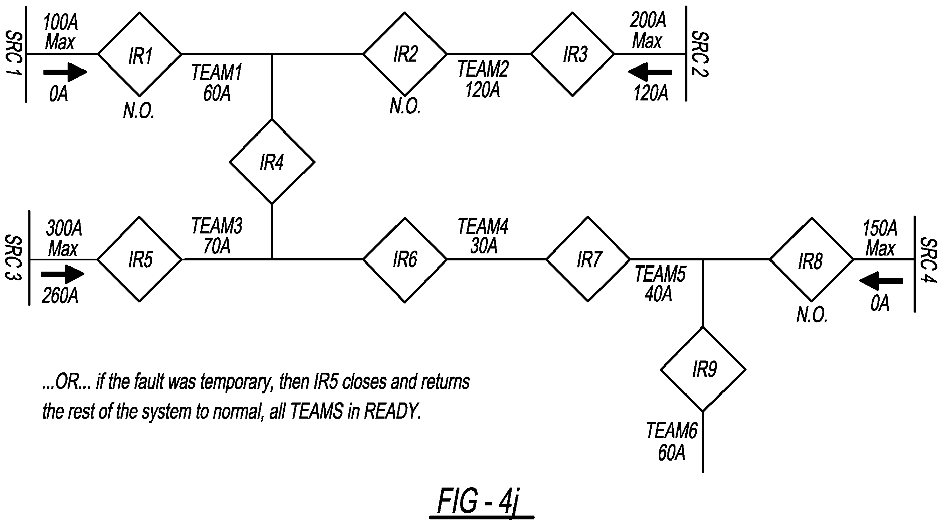

Figs. 4a - 4j, which are not part of the invention, illustrate response to the fault depicted in Figs. 3a - 3i, but utilizing a second mode of operation, CORA. As shown in Fig. 4a, there are normal circuit conditions when a fault occurs in Team 3, the interconnections between nodes IR4, IR5 and IR6. As shown in Fig. 4b, the switch at IR5 operates and opens to isolate the fault. At Fig. 4c, the nodes IR4 and IR6 sense a loss of voltage and initiate the second mode of operation, for example, a rapid self-healing or CORA mode of operation, if the user has configured the system to permit CORA. The node IR4, with reference to the Netlist, prioritizes the nodes IR1 and IR2 for response. The Netlist, being updated, allows IR4 to determine real time that IR1 has 100 Ampere (A) of capacity and IR2 has 80A of capacity, Fig. 4d. The switch at IR1 is then chosen to close, Fig. 4e, given its higher available capacity, although alternate criteria could be employed that would suggest IR2 should close instead. For this example, higher available capacity is the set criteria. At the same time, the switch at IR4 opens, and Team 1 is restored. Also at the same time, with reference to the Netlist, the node IR6 is checking for available capacity from node IR8 to restore Teams 4, 5 and 6, Fig. 4f. At Fig. 4g, because IR8 has sufficient available capacity, IR6 opens and IR8 closes completing restoration. Of note is that IR7 and IR9, opened on loss of voltage in the first mode of operation remained closed throughout the process. At Fig. 4h, the node IR5 may continue its testing and reclose process. If the fault is permanent, the switch at node IR5 locks out, and no additional action is required. If the fault is resolved, either because it was temporary or repaired, the switch at IR5 closes, the entire distribution network can then return to normal with all Team restored, Fig. 4j.

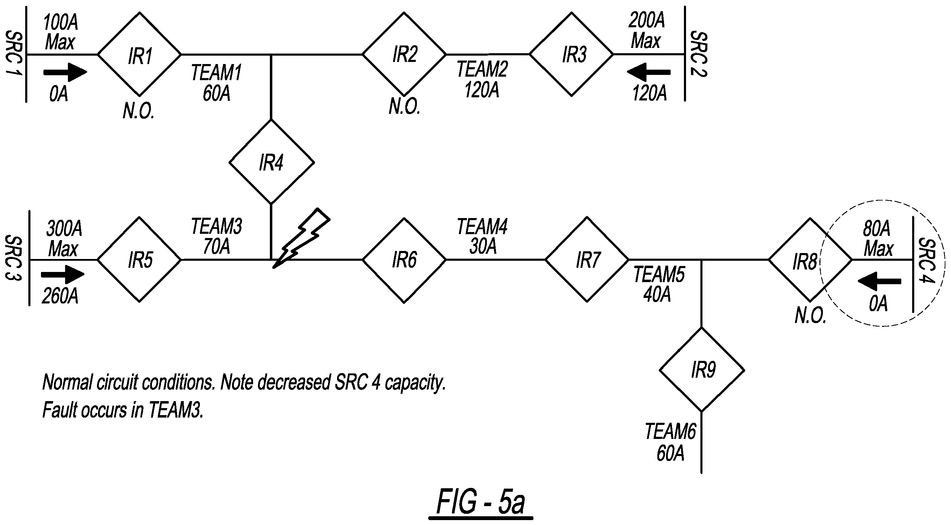

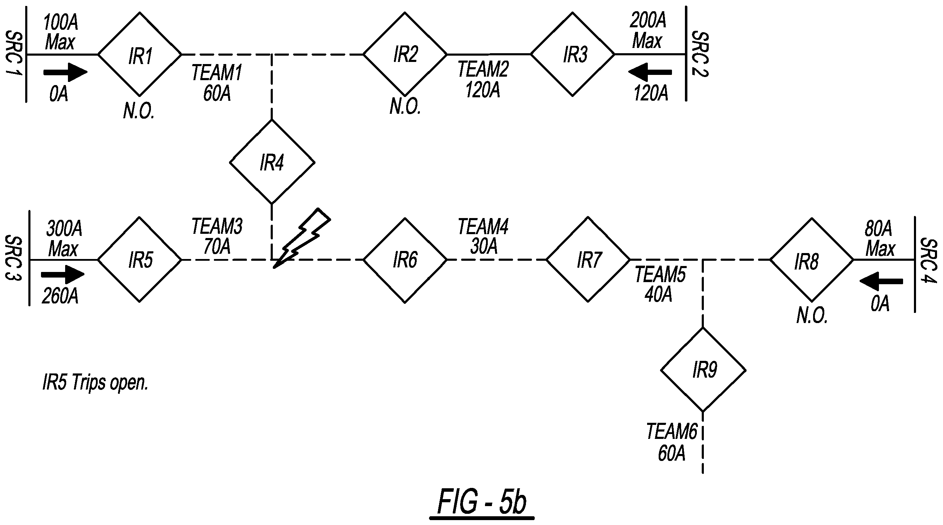

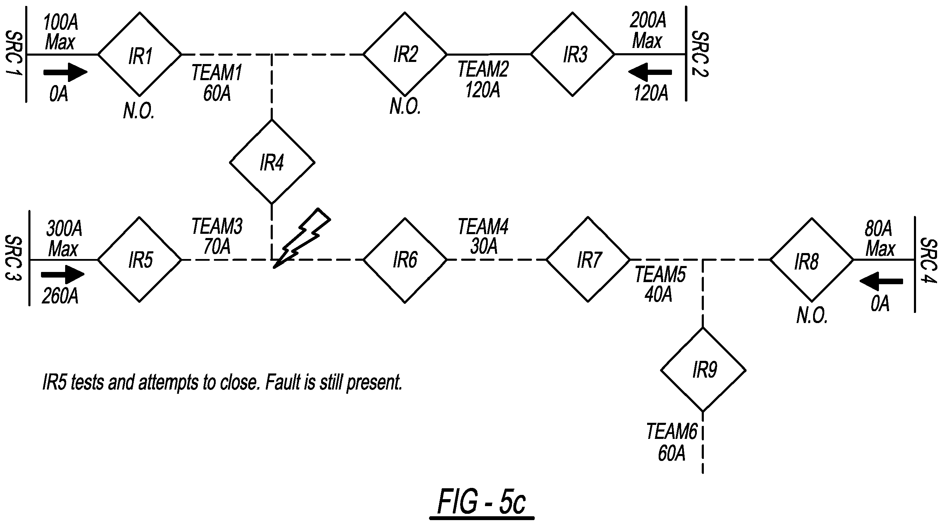

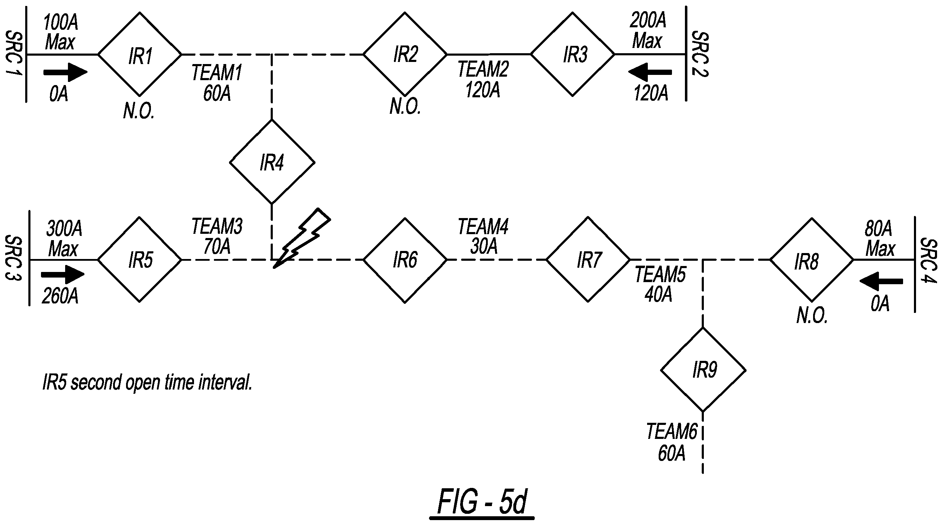

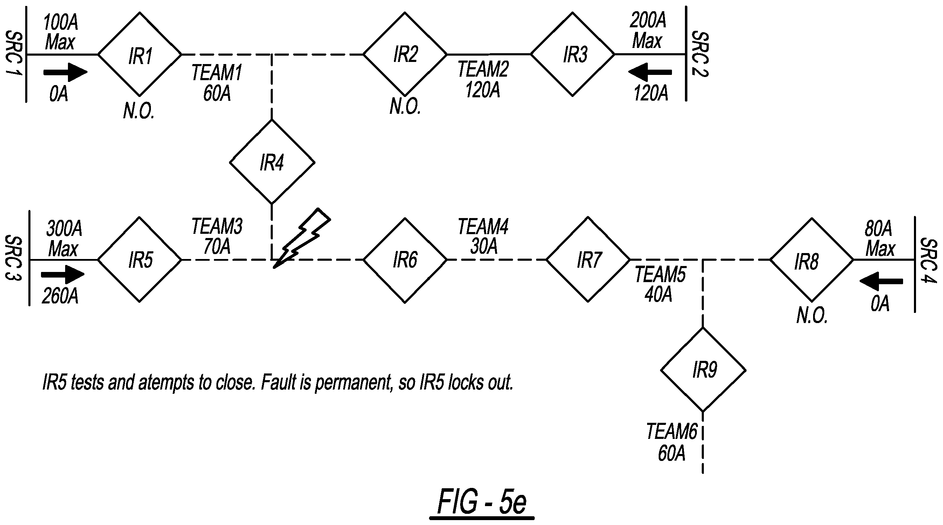

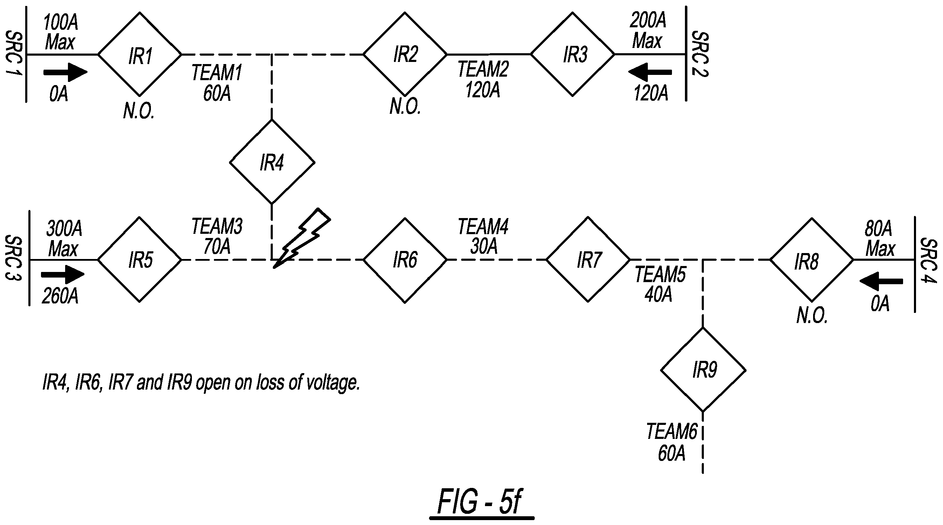

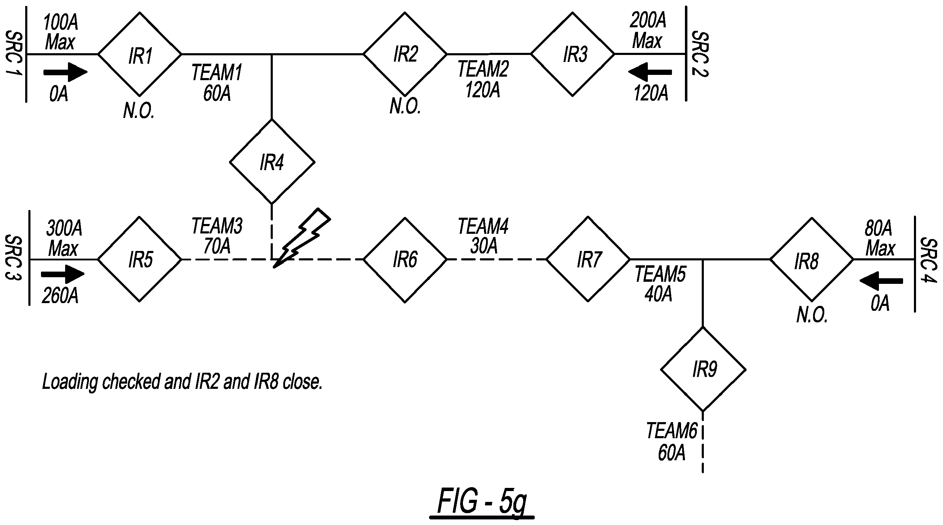

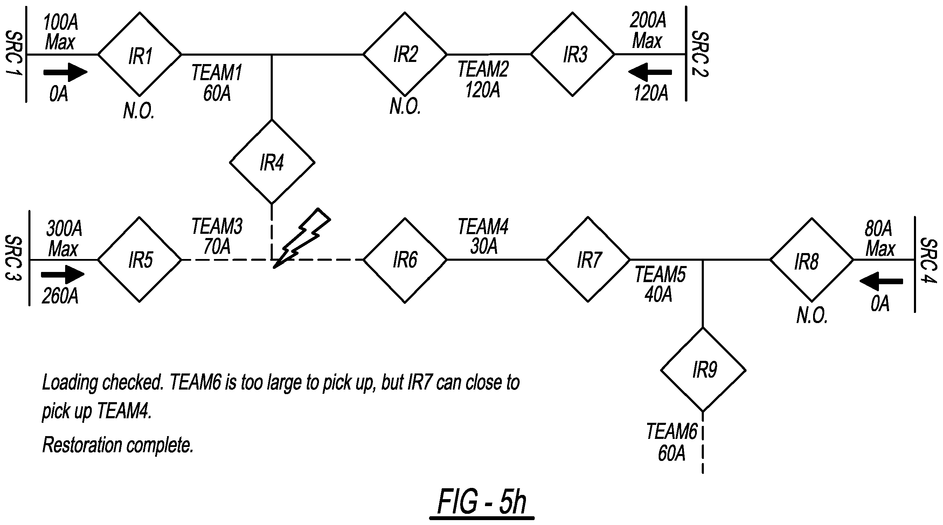

Figs. 5a - 5h, which are not part of the invention, illustrate restoration operation in accordance with a first mode of operation in response to a fault of the first type illustrated in Figs. 3a - 3i; however in the scenario the source SRC4 has reduced capacity. As shown in Fig. 5a, there are normal circuit conditions when a fault occurs in Team 3, the interconnections between nodes IR4, IR5 and IR6. As shown in Fig.5b, the switch at IR5 operates and opens to isolate the fault. Fig. 5c illustrates the switch at IR5 initiating a closing operation, for example using a pulse testing methodology to test whether the fault still exists before attempting to close, and Fig. 5d illustrates the fault being persistent and the switch at IR5 locking our, Fig. 5e. On loss of voltage, the switches at nodes IR4, IR6, IR7 and IR9 open, Fig. 5f. The tie switches at IR2 and IR8 are evaluated for loading condition, and the respective switches are closed, Fig. 5g. Next, loading is evaluated at node IR7, but because the loading of Team 6 is too large for source SRC 4, the switch at IR9 remains open, but the switch at IR7 is closed to restore Team 4, Fig. 5h.

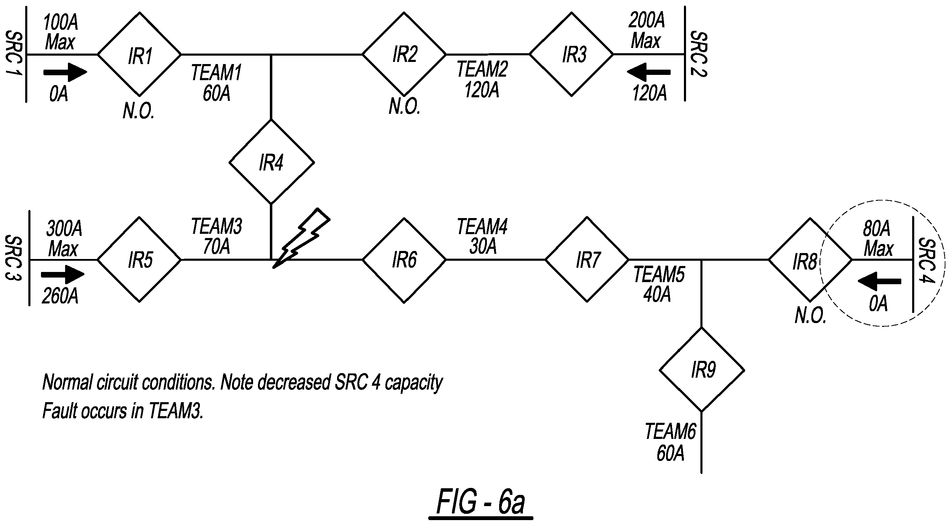

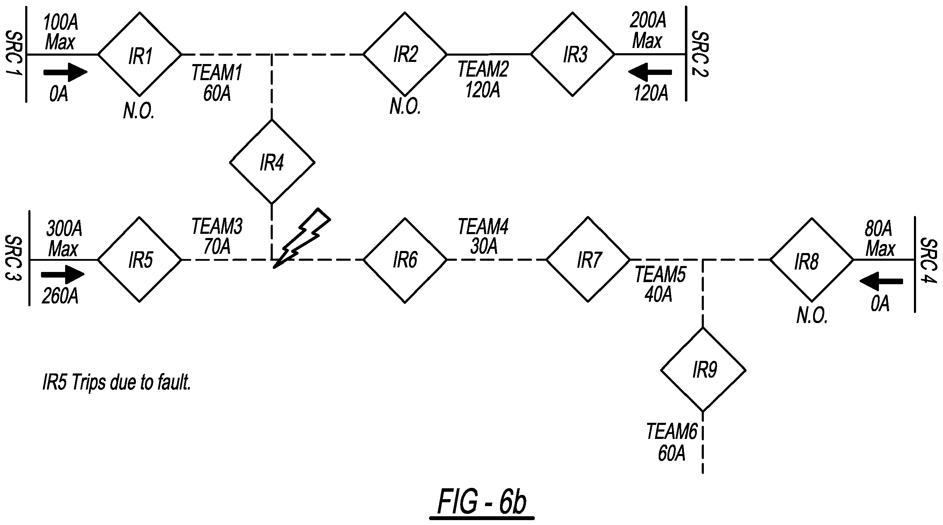

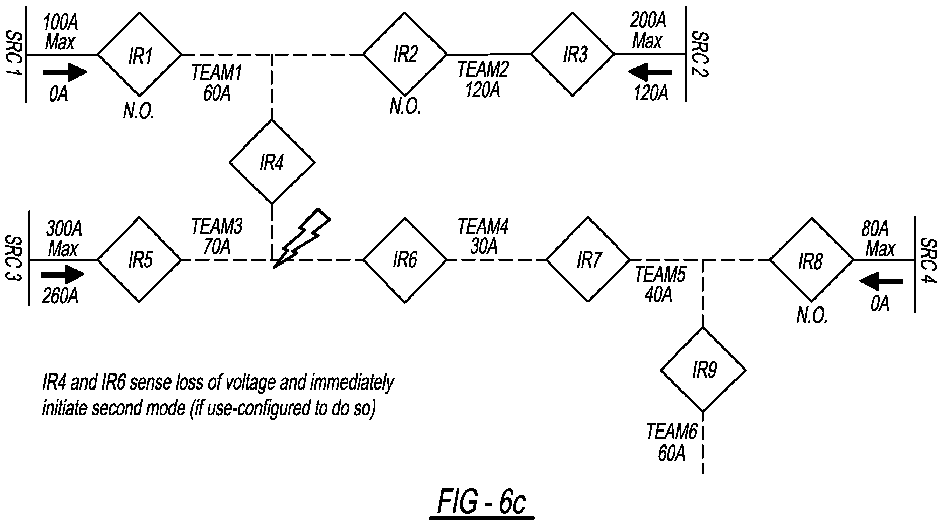

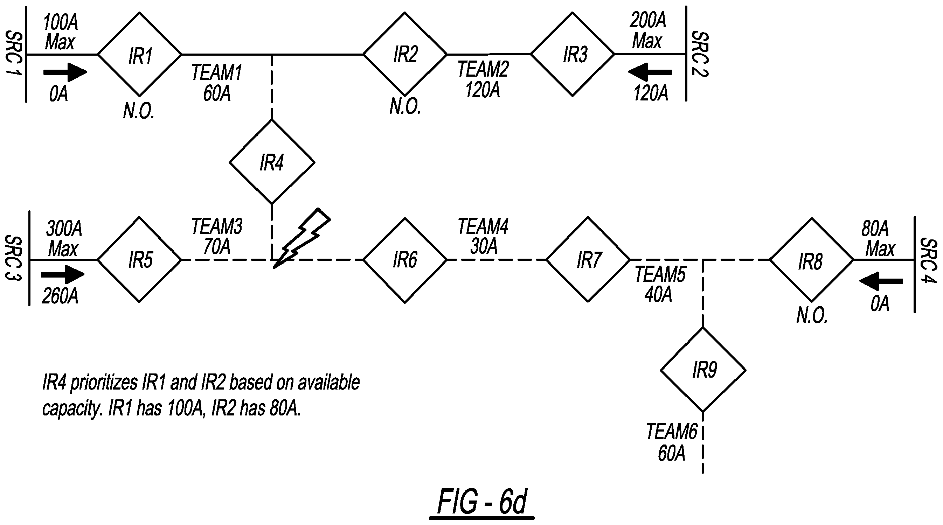

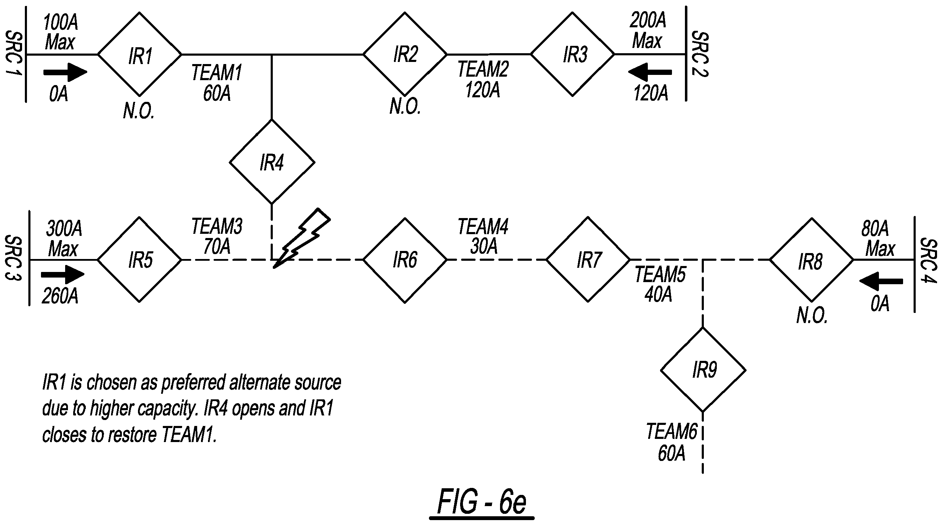

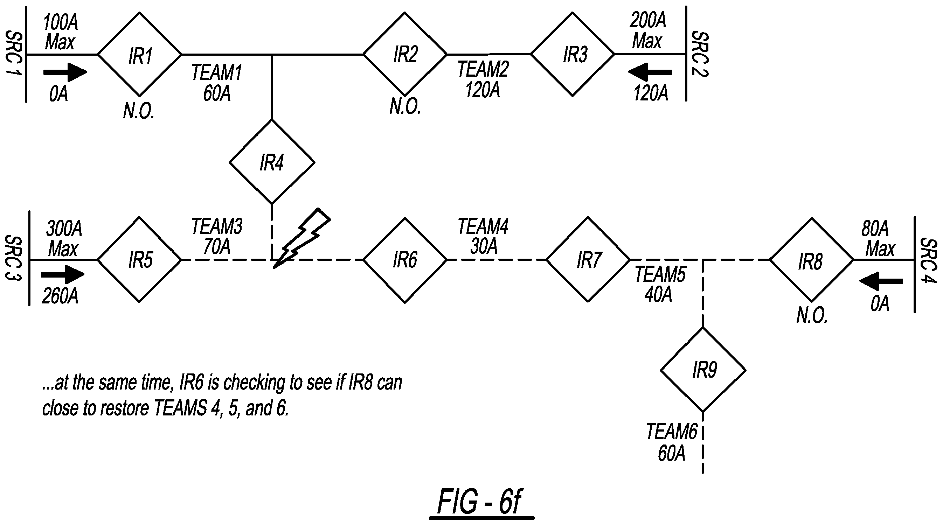

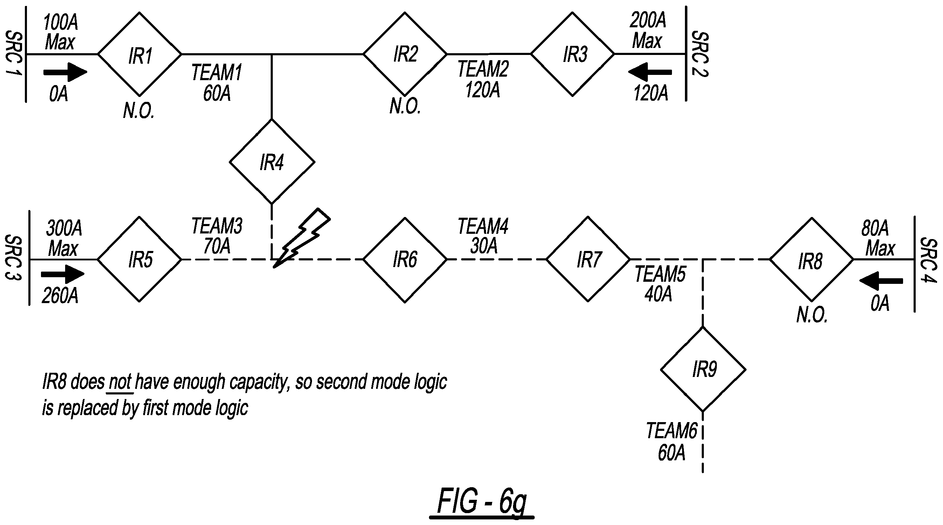

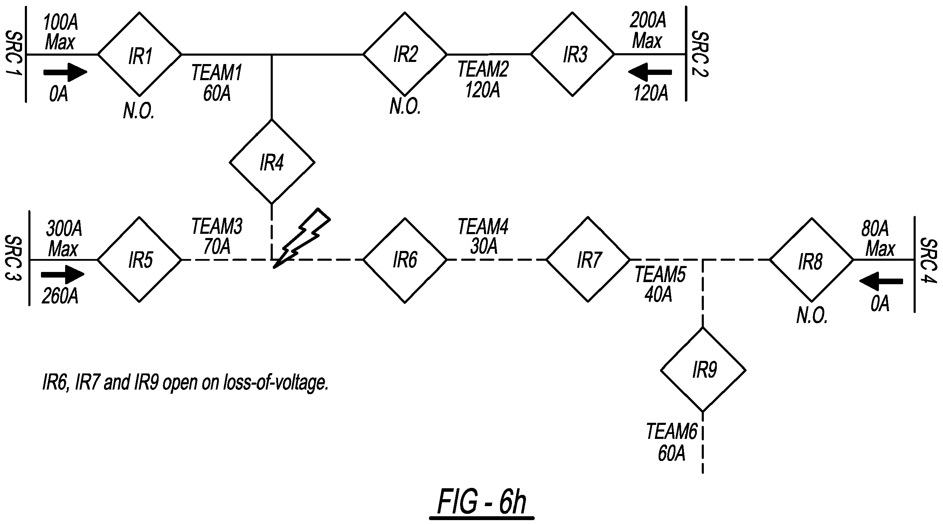

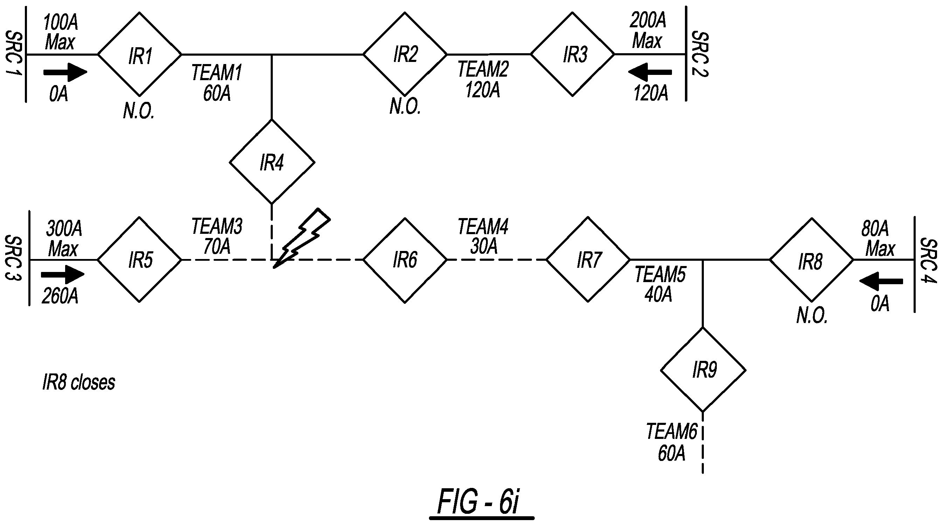

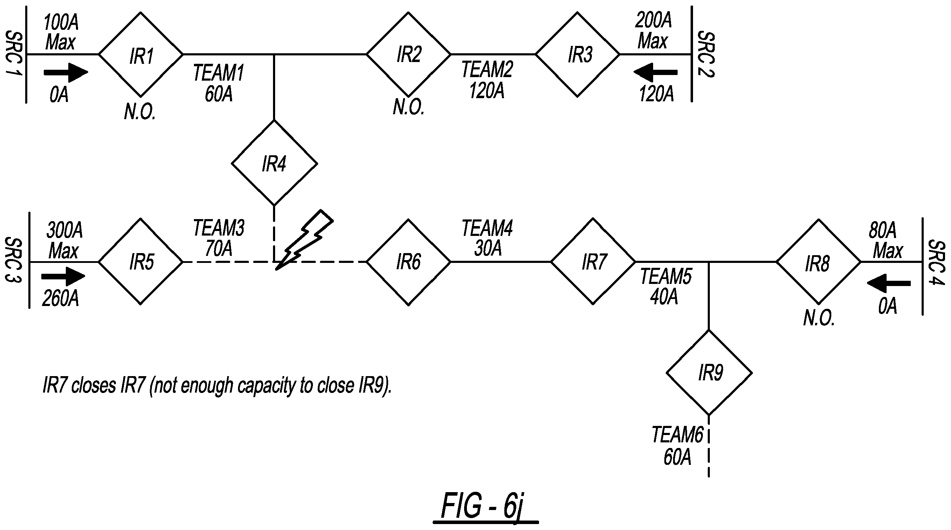

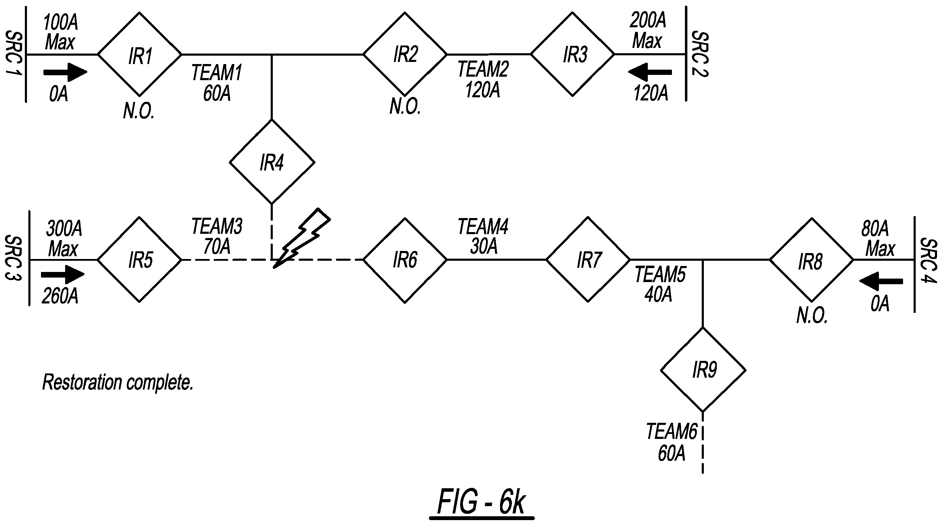

Figs. 6a - 6j illustrate response to the fault and capacity conditions depicted in Figs. 5a - 5h, but utilizing a second mode of operation, CORA. As shown in Fig. 6a, there are normal circuit conditions when a fault occurs in Team 3, the interconnections between nodes IR4, IR5 and IR6. As shown in Fig. 6b, the switch at IR5 operates and opens to isolate the fault. At Fig. 6c, the nodes IR4 and IR6 sense a loss of voltage and initiate the second mode of operation, for example, a rapid self-healing or CORA mode of operation, if the user has configured the system to permit CORA. The node IR4, with reference to the Netlist, prioritizes the nodes IR1 and IR2 for response. The Netlist, being updated, allows IR4 to determine real time that IR1 has 100A of capacity and IR2 has 80A of capacity, Fig. 6d. The switch at IR1 is then chosen to close, Fig. 6e, given its higher available capacity, although alternate criteria could be employed that would suggest IR2 should close instead. For this example, higher available capacity is the set criteria. At the same time, the switch at IR4 opens, and Team 1 is restored. Also at the same time, with reference to the Netlist, the node IR6 is checking for available capacity from node IR8 to restore Teams 4, 5 and 6, Fig. 6f. At Fig. 6g, because IR8 has insufficient available capacity, the CORA logic is suspended, and existing restoration logic, in accordance with the first mode of operation, is employed to complete restoration. The switches at nodes IR6, IR7 and IR9 open on loss of voltage, Fig. 6h. The switch at node IR8 closes restoring Team 5, Fig. 6i, and given available capacity the switch at IR7 closes restoring Team 4, Fig. 6j. The switch at node IR9 must remain open because there is not sufficient capacity, and restoration is complete, Fig. 6k

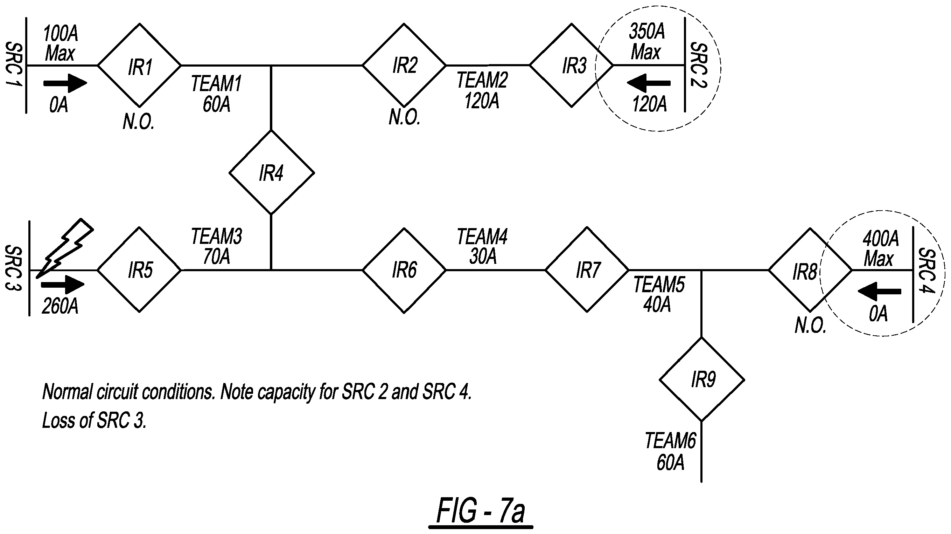

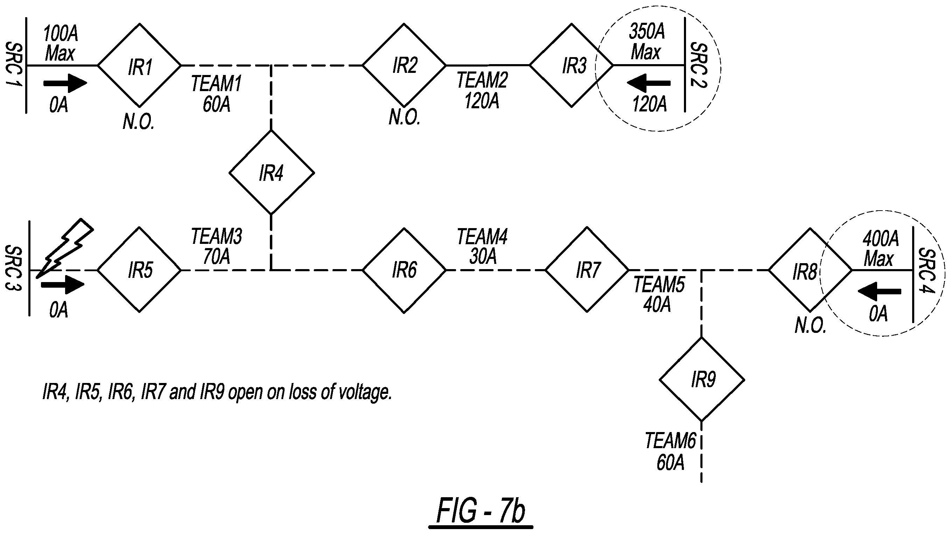

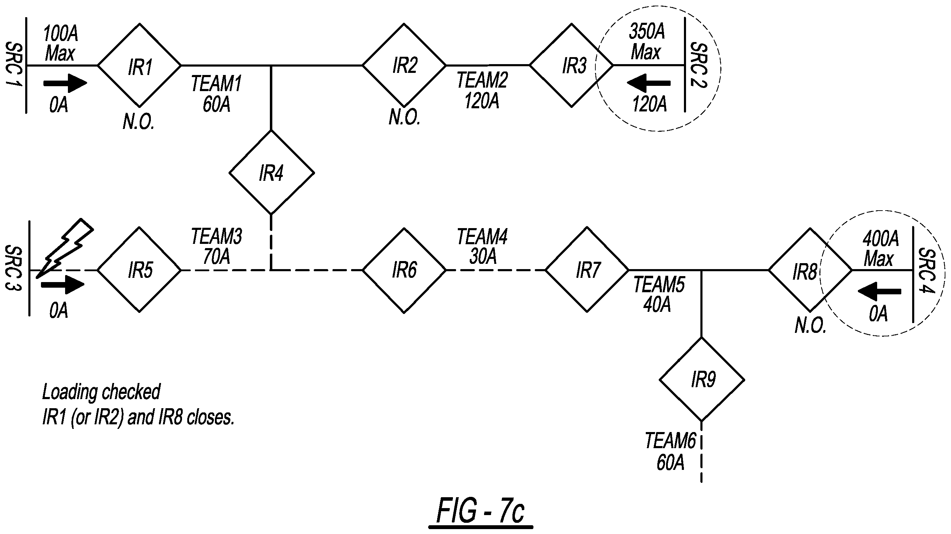

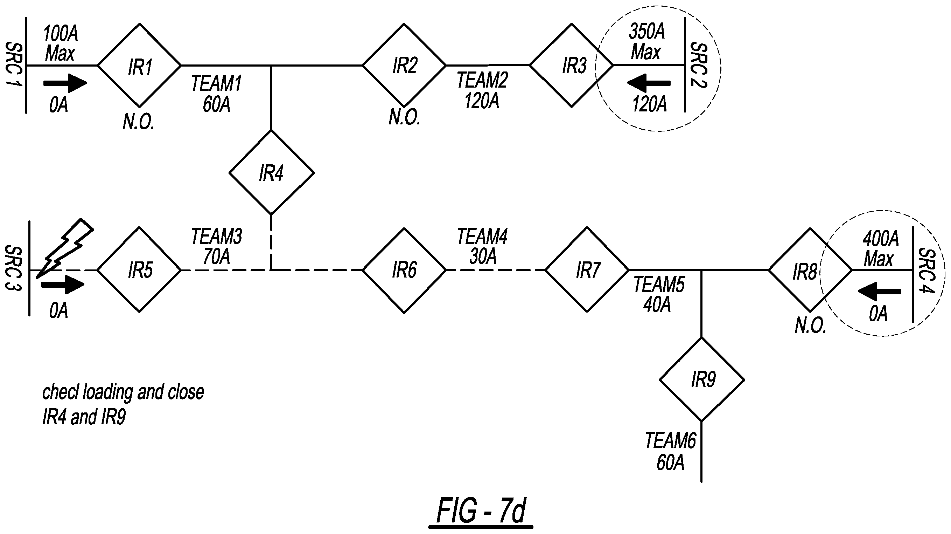

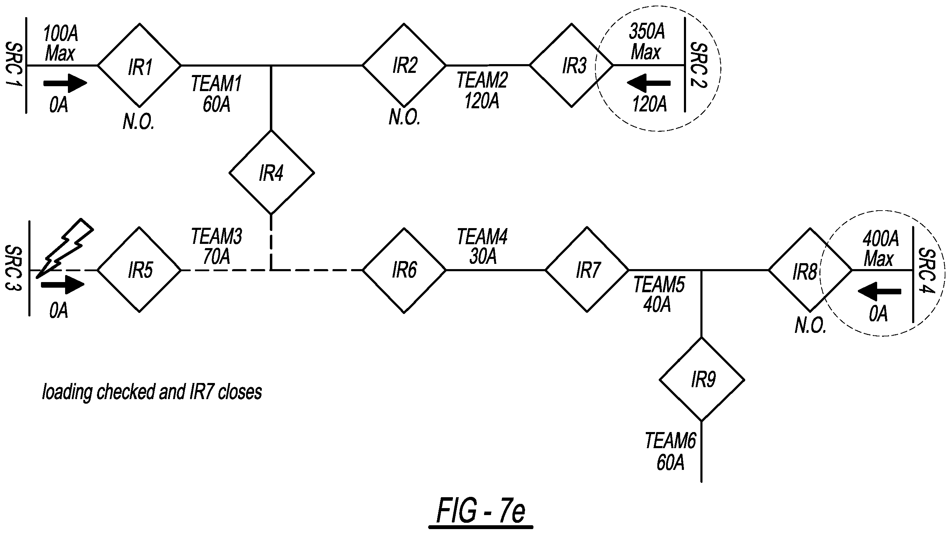

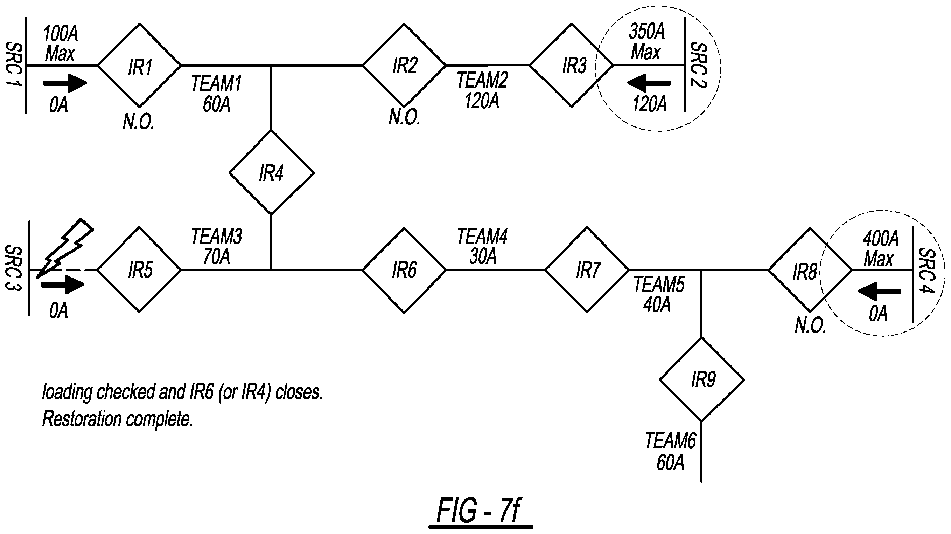

Figs. 7a - 7f, which are not part of the invention, illustrate restoration operation in accordance with a first operating mode in response to a fault of a second type, loss of source SRC 3. As shown in Fig. 7a, there are normal circuit conditions when source SRC 3 is lost. The switches at IR4, IR5, IR6, IR7 and IR9 open on loss of voltage, Fig. 7b. At Fig. 7c, loading is checked with reference to the Netlist, and the switches at IR1 (or IR2) and IR8 are closed. Loading is then checked with reference to the Netlist and the switches at IR4 and IR9 are closed, Fig. 7d. Loading is checked for closing the switch at node IR7, and the switch is then closed, Fig. 7e. Finally, loading is checked to close the switch at IR6 (or IR4) to complete restoration, Fig. 7f.

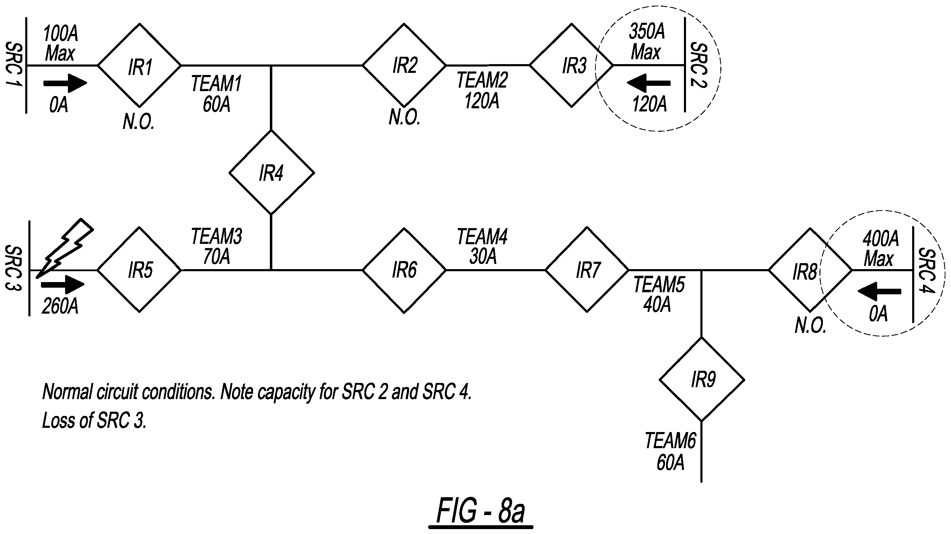

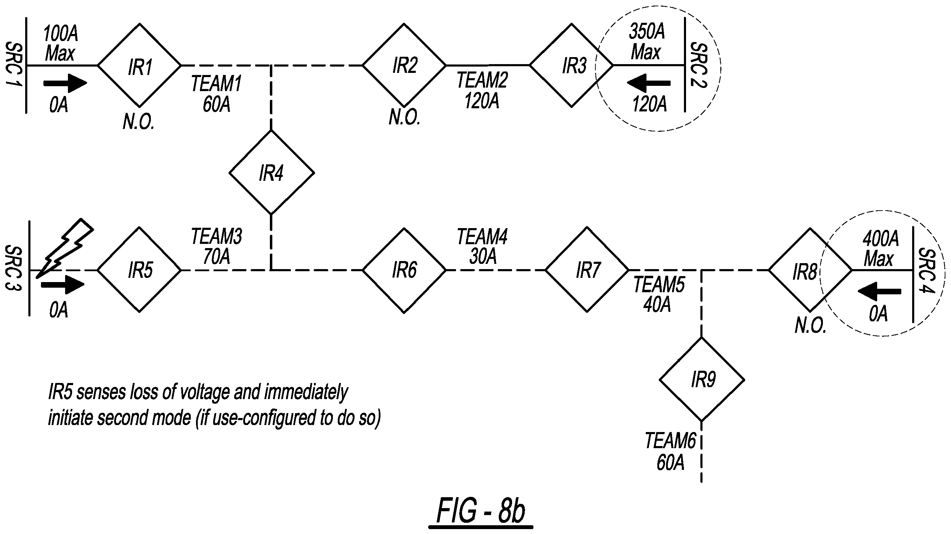

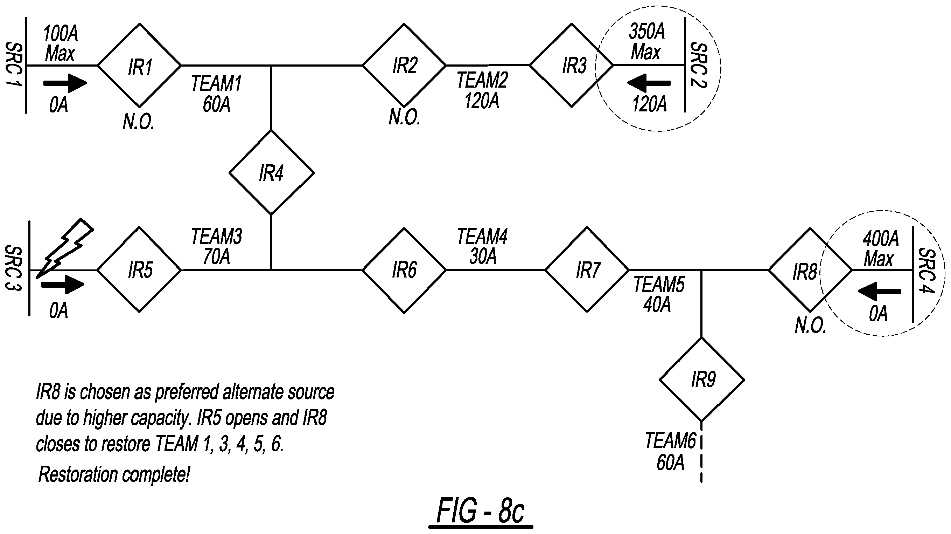

Figs. 8a - 8c, which are not part of the invention, illustrate restoration operation in response to the fault of the second type depicted in Figs. 7a - 7f but in accordance with a second mode of operation, CORA. As shown in Fig. 8a, there are normal circuit conditions when source SRC 3 is lost. The node IR5 immediately senses loss of voltage and initiates restoration in accordance with the second mode of operation, e.g. CORA, if the system is configured by the user for the second operating mode. Capacity is evaluated with reference to the Netlist, and the node IR8 is chose to close given its higher available capacity. The switch at node IR8 is closed and the switch at IR5 is opened, Fig. 8c. Teams 1 , 3, 4, 5 and 6 are restored, and restoration is complete.

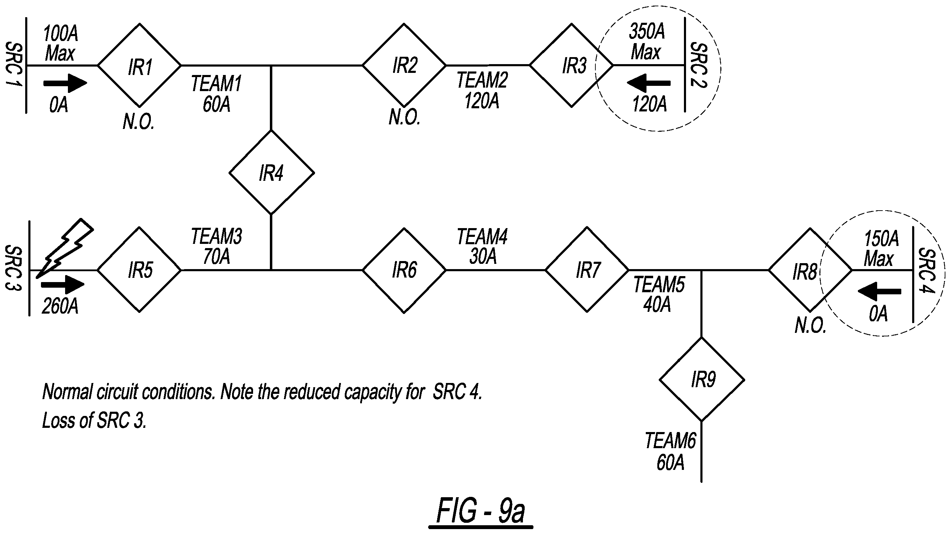

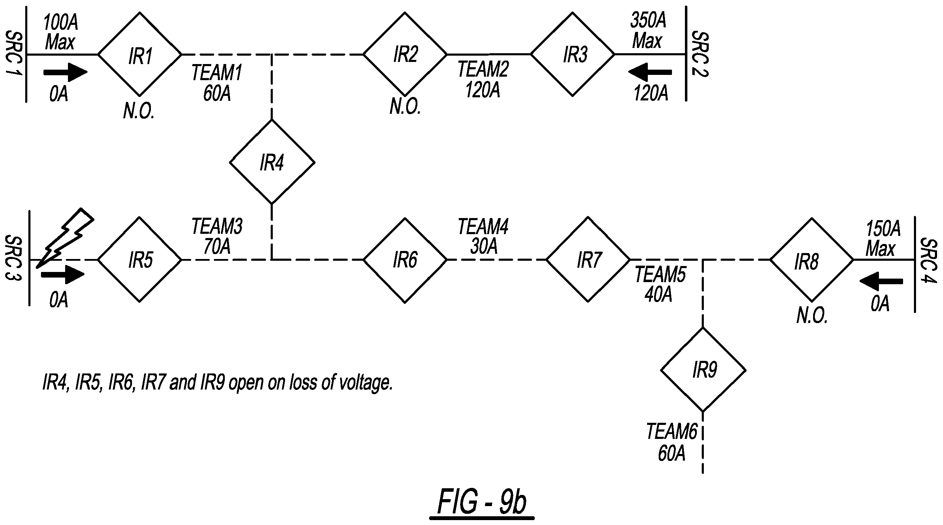

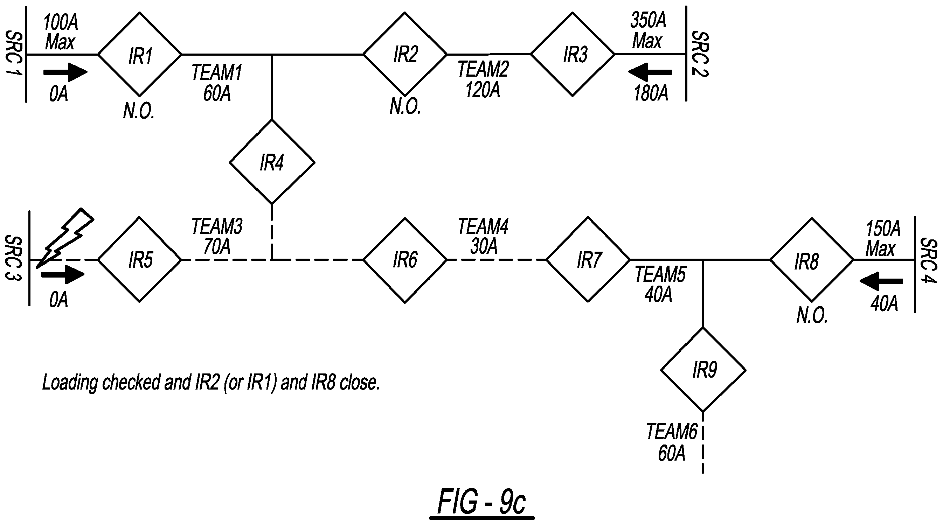

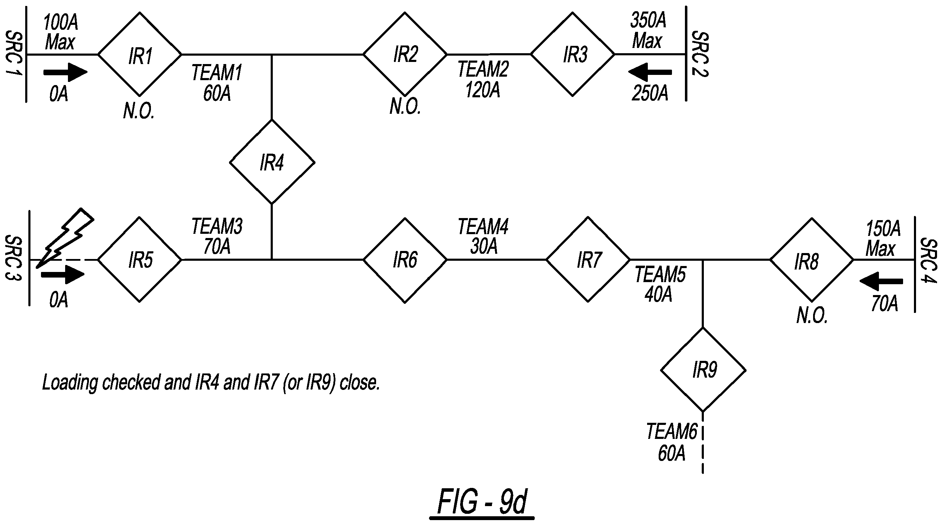

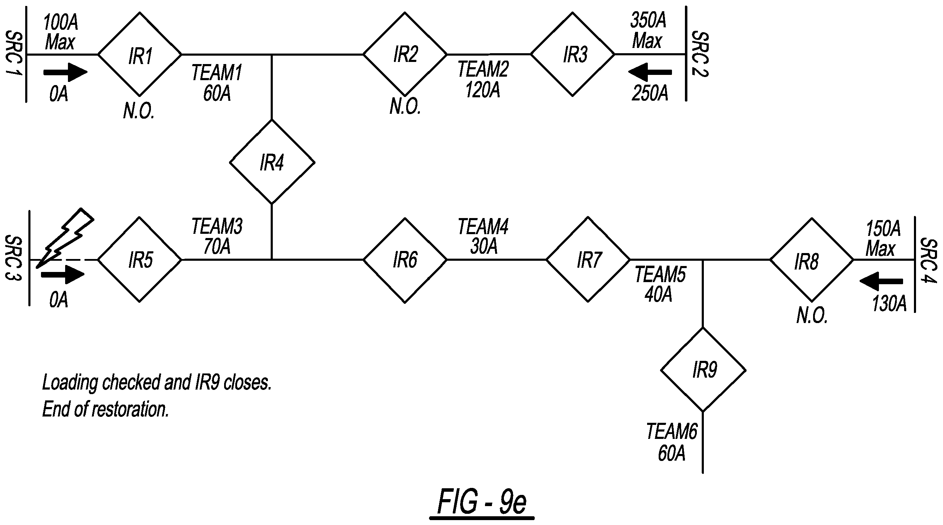

Figs. 9a - 9i illustrate restoration operation in accordance with a first operating mode in response to the fault of a second type depicted in Figs. 7a - 7f, loss of source SRC 3, but also in view of reduced capacity at source SRC4. As shown in Fig. 7a, there are normal circuit conditions when source SRC 3 is lost. The switches at IR4, IR5, IR6, IR7 and IR9 open on loss of voltage, Fig. 9b. At Fig. 9c, loading is checked with reference to the Netlist, and the switches at IR1 (or IR2) and IR8 are closed. Loading is then checked with reference to the Netlist and the switches at IR4 and IR7 (or IR9) are closed, Fig. 9d. Loading is checked for closing the switch at node IR9, and the switch is then closed, Fig. 9e. Restoration is then complete.

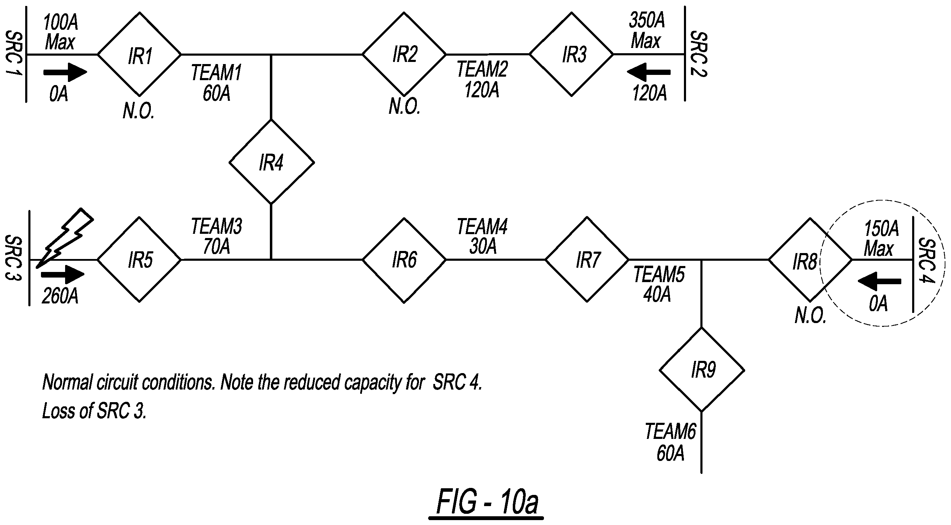

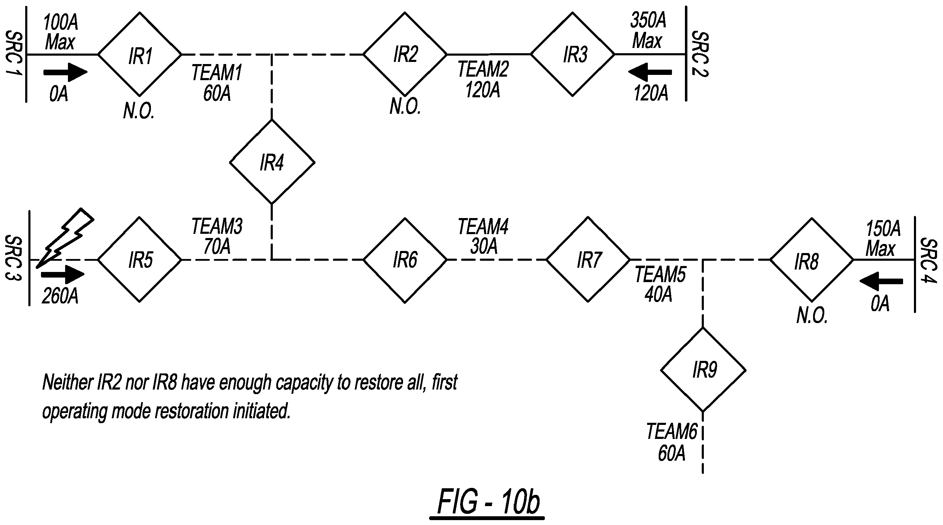

Figs. 10a - 10c, which are not part of the invention, illustrate restoration operation in response to the fault of the second type and capacity conditions depicted in Figs. 9a - 9e but in accordance with a second mode of operation, CORA. As shown in Fig. 10a, there are normal circuit conditions when source SRC 3 is lost. The node IR5 immediately senses loss of voltage and initiates restoration in accordance with the second mode of operation, e.g. CORA, if the system is configured by the user for the second operating mode. However, the node IR5 quickly determines neither nodes IR2 nor IR8 have sufficient capacity to permit CORA restoration. First operating mode restoration is then initiated, Fig. 10b, and restoration proceeds as described above in connection with Figs. 9a - 9e.

### Load Balancing and Load Shedding

As can be seen from the foregoing examples and appreciated that under various possible operating conditions may occur, a possible result of the CORA- type restoration operating mode is that load may be restored from a single source, even if multiple alternate sources were available. This has the potential of overloading the single source. Therefore, a third operating mode, a post- restoration operating mode may be employed to examine loading and capacity conditions once all load is restored, and then look for closed-transition methods of distributing the load more evenly. However, more than a third operating mode being a post-restoration operating mode, load distribution can be constantly monitored to look for more efficient, more reliable, and less costly configurations of circuit resources. With load balancing, the third-operating mode may be active at the same time as either the first or second operating modes as well as post restoration, and the circuit may automatically move from a normal state to a more optimal state at any time it is allowed based upon a user configuration setting.

During system configuration, Team loads may be prioritized. For example according to the following priorization schedule from 1 -10. This schedule may then be used post-restoration to assist load balancing and load shedding.
10 = no shedding or transferring allowed
9 = load shedding not allowed, load transfer allowed through closed transition only
8 = load shedding not allowed, load transfer allowed through an open transition only
7,6,5,4 = load shedding allowed, lower priority loads shed first. Only shed after load transfers have been considered
3,2,1 = load shedding allowed, lower priority loads shed first. Shed these loads before considering load transfers to other circuits

Additional configuration settings may include whether load may be shed "open", i.e., load may be transferred to adjacent feeders using only an open transition or "closed" i.e., load may be transferred to adjacent feeders using only a closed transition.

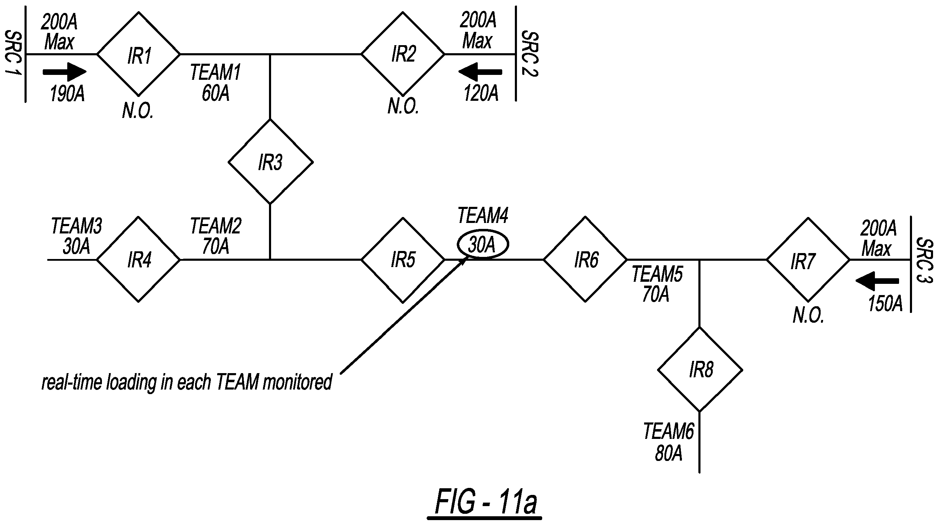

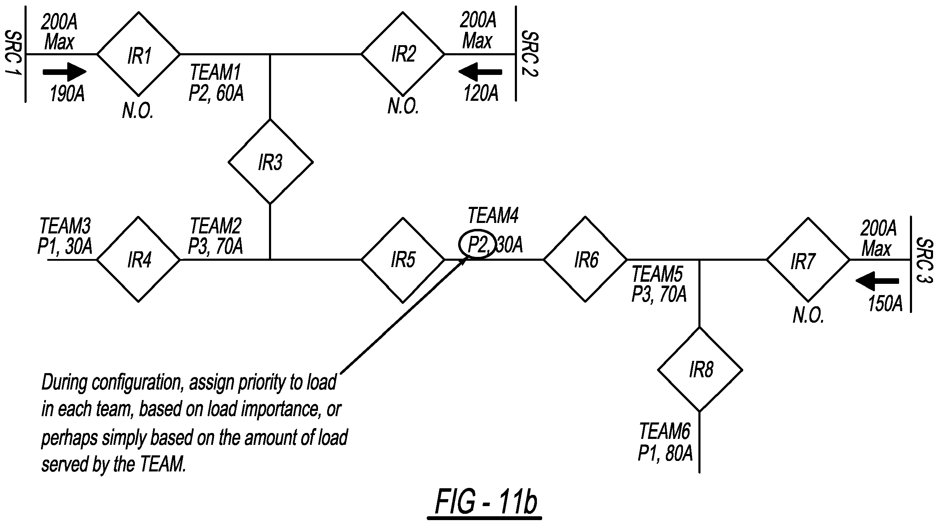

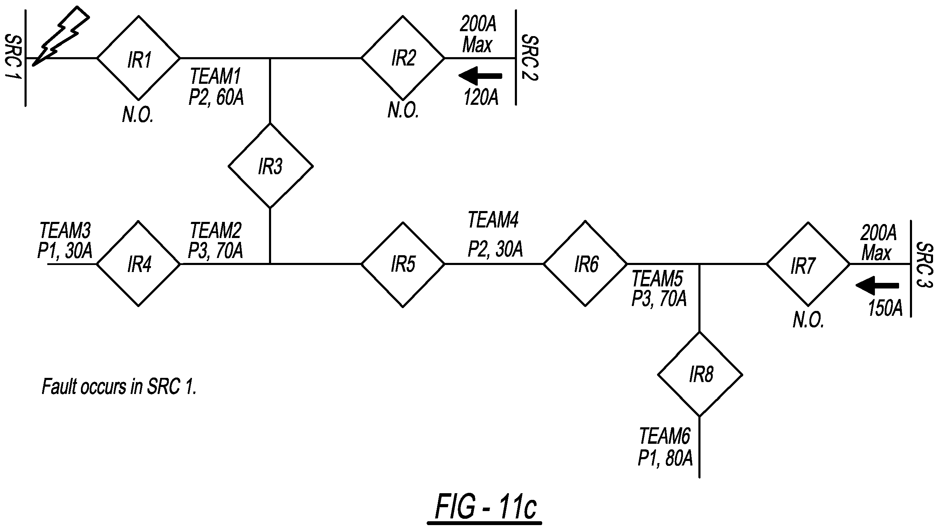

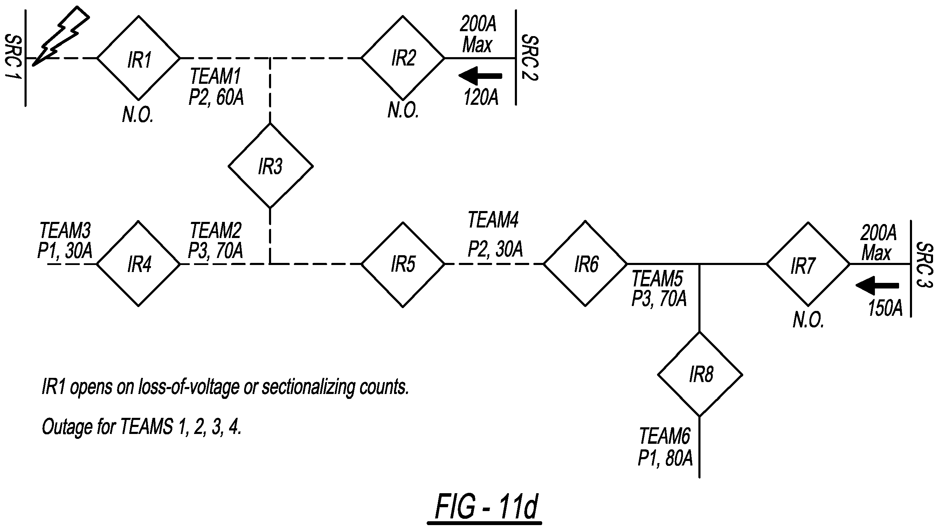

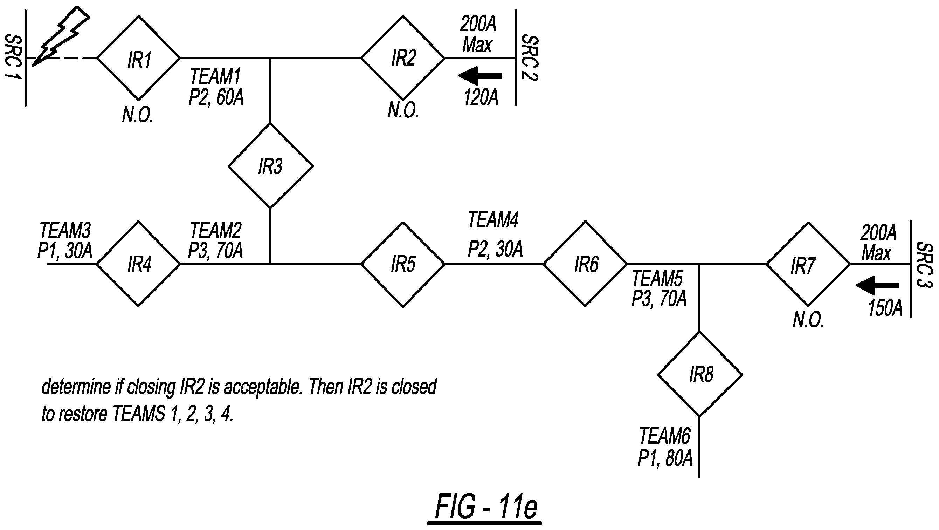

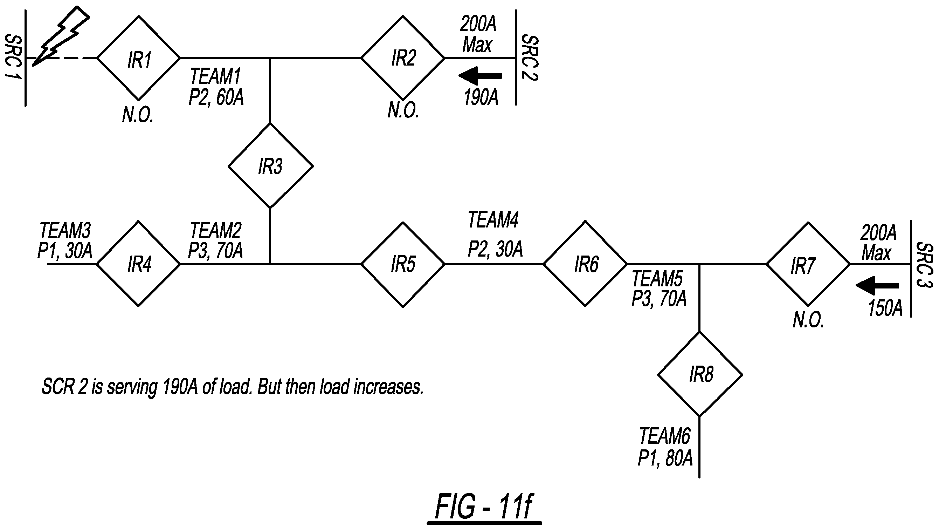

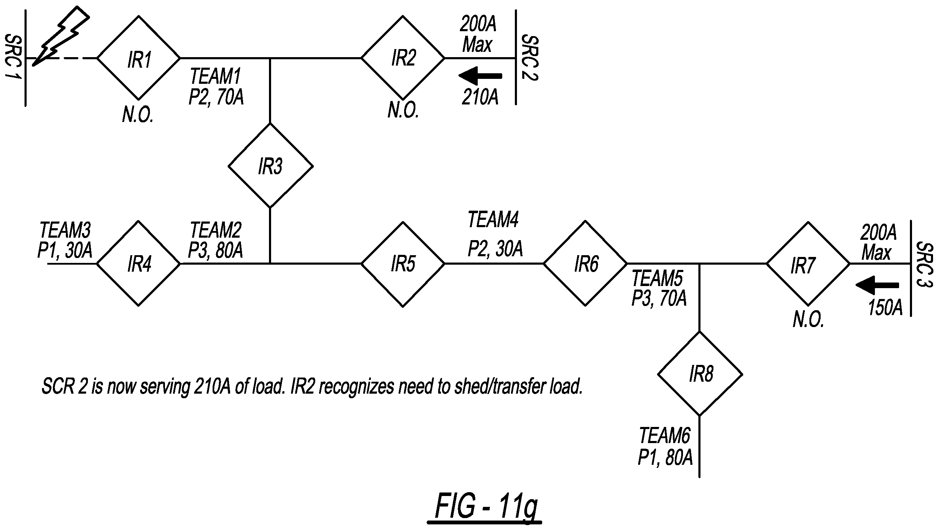

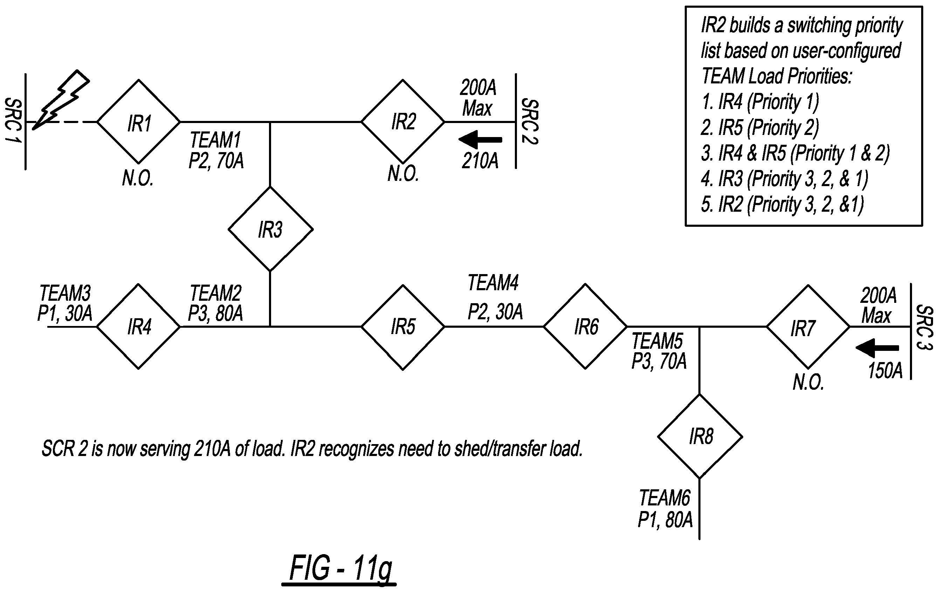

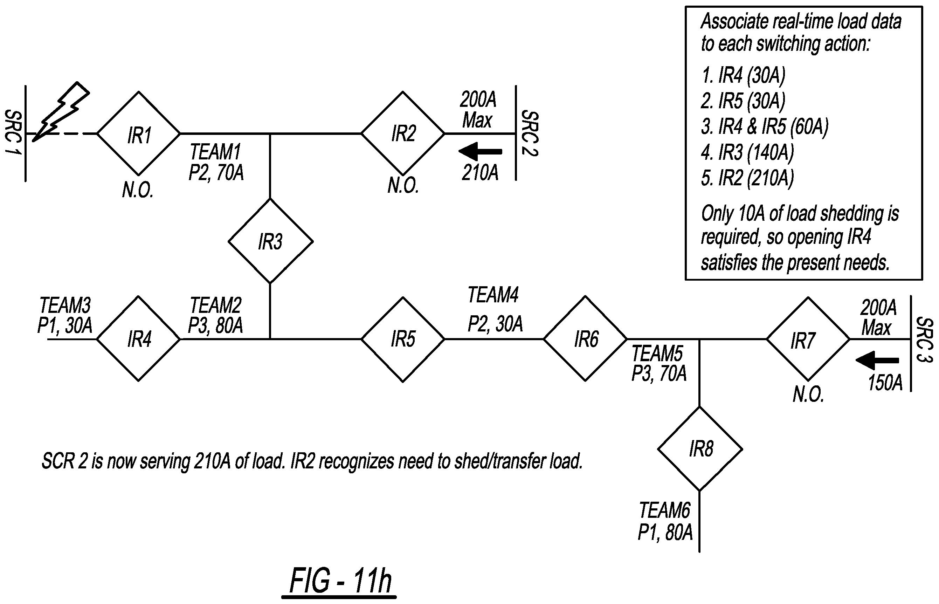

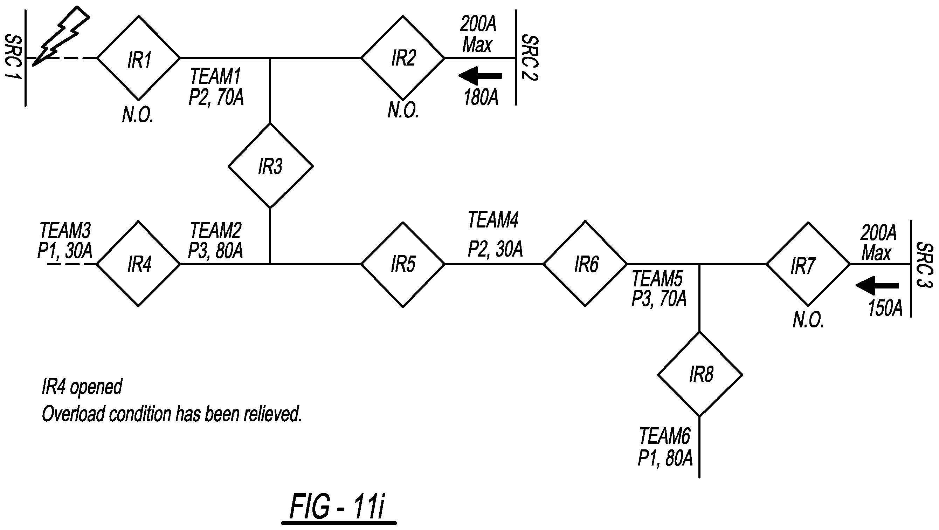

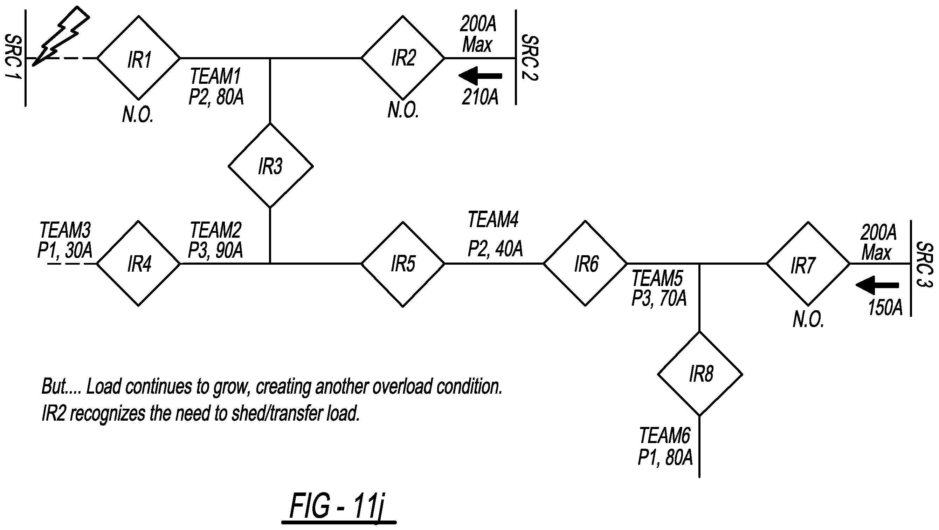

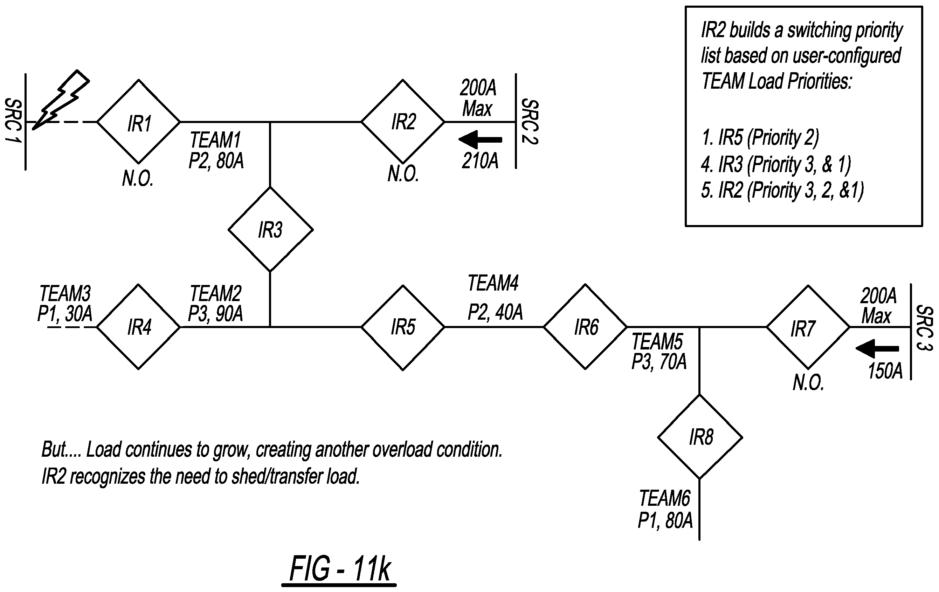

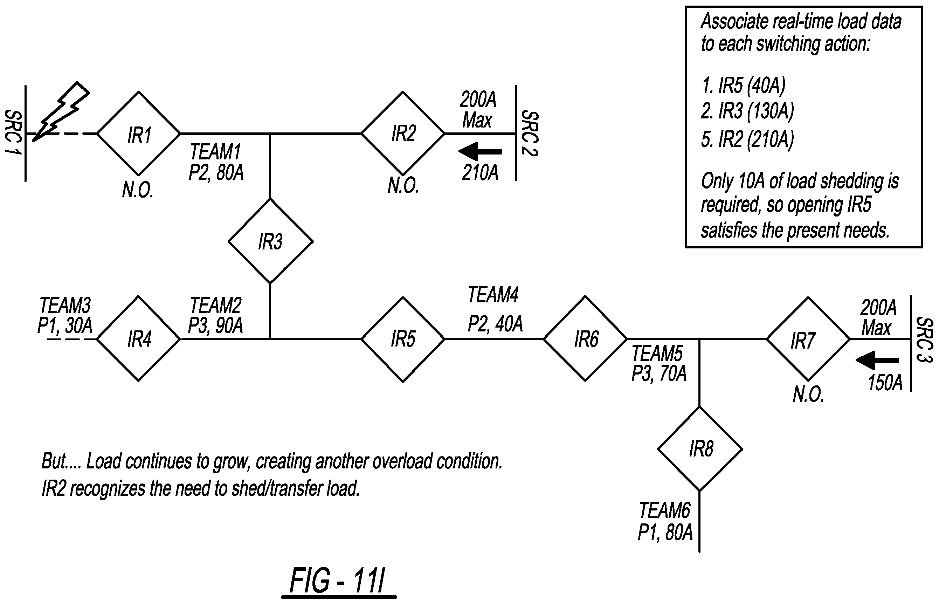

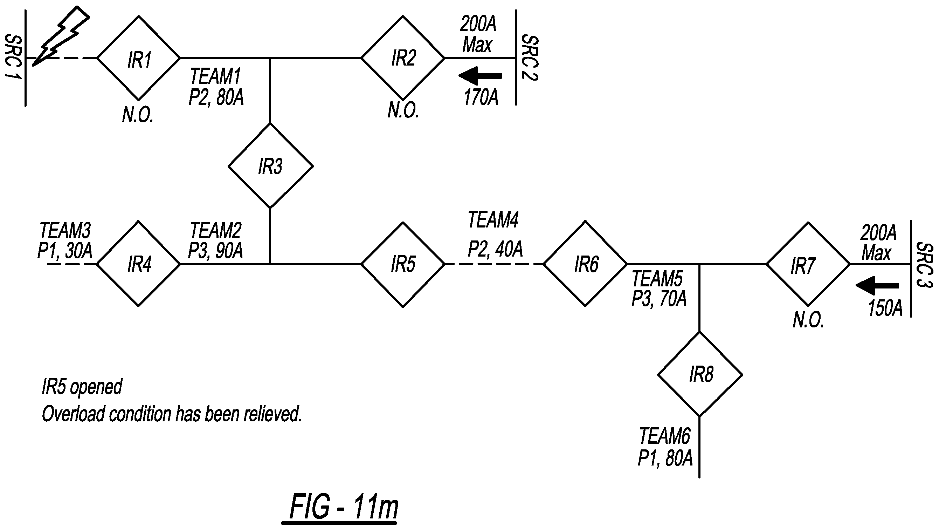

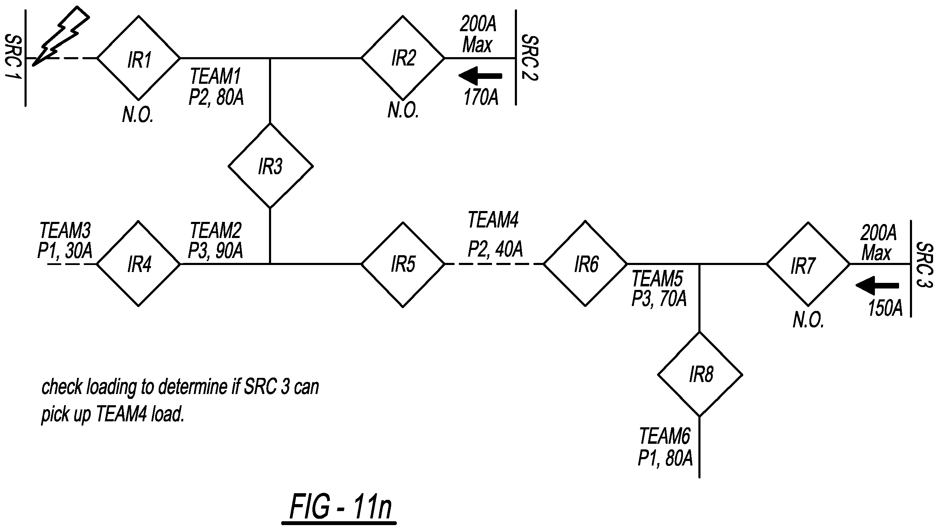

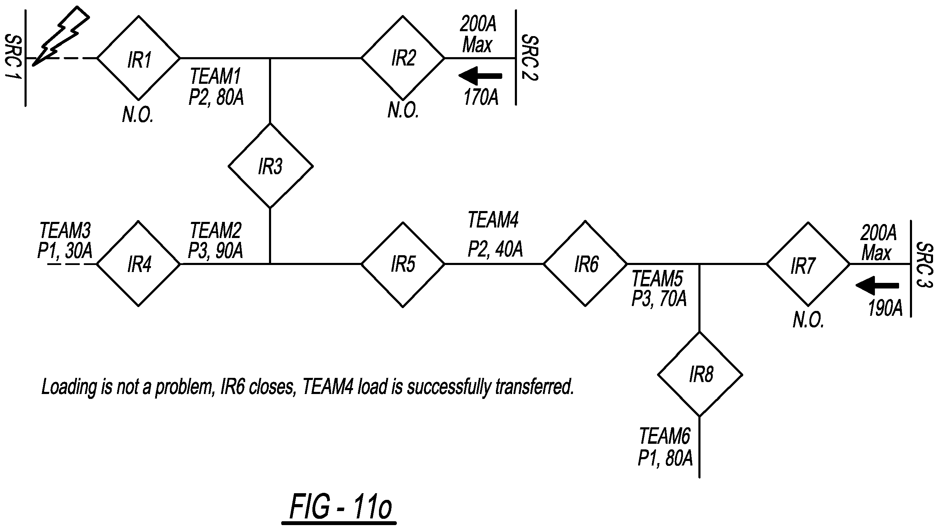

Figs. 11 a - 11 m illustrate a post-restoration load management process. Real time loading of each Team is monitored and communicated via the Netlist, Fig. 11 a. Additionally, as noted, during system configuration load priority is assigned to each Team, Fig. 11 b. Priority may be set based upon the importance or criticality of the load or perhaps based upon the amount of load served by the Team. Fig. 11c illustrates a loss of source fault, source SRC 1 being lost, and Fig. 11d illustrates the switch at node IR1 opening on loss of voltage and the resulting outage to Teams 1 , 2, 3 and 4. Using the second operating mode, CORA, IR2 is evaluated to determine if it may be closed and is closed to restore Teams 1 , 2, 3 and 4, Fig. 11e. This increases the load serviced by source SRC 2, Fig. 11f, and because it is servicing load in excess of its capacity, node IR2 recognizes the need to shed or transfer load.

At Fig. 11g, the node IR2 using the Netlist builds a switching priority list based upon the Team priorities assigned during configuration. It also assigns real time load data to each switching action, Fig. 11 h. At Fig. 11i, the switch at node IR4 is opened to relieve the overloading condition. However, Fig. 11j illustrates that the overload condition continues to worsen, and node IR2 recognizes a need to transfer/shed additional load. At Fig. 11 k, the node IR2 builds another switching priority list, and assigns real time load data to the switching actions, Fig. 11l. It is determined that the switch at node IR5 may be opened to relieve the overload situation, and it is opened at Fig. 11m. Once the overload situation is overcome, the system may then attempt to pick up Teams not being serviced. At Fig. 11n, loading of source SRC 3 is checked to determine if Team 4 can be picked up. It can, and the switch at IR6 closes to pick up Team 4 from source SRC 3, Fig. 11o.

Assigning different load priorities to the Teams would result in different loads being picked up or shed, and hence, different switches at the various nodes being opened or closed.

### New Normal and Return to Normal

Post restoration and following load shedding/balancing, the distribution will likely be in a substantially different configuration than is its "normal" state. The term "normal" state implies these other states are abnormal or not desired. This is not the case, and the term is used for convenience. Existing distribution systems are configured with what is considered the normal state of each node in the system, e.g., switches in a Team, and the role each switch plays in the Team (Src/Sub, Load/Tie, etc.) when the Team is in its normal state. When an event occurs that causes reconfiguration a number of switches change state and change their roles. These changes don't prevent continued reconfigurations from occurring though. If a second contingency event takes place the present state of the system is used to find yet another configuration to restore as much load as possible.

"Normal" is then the original state of the system, but not necessarily the starting point for any reconfiguration. However it is not necessary to have a state called "normal." In fact, "normal" could be replaced with a continuously optimizing algorithm that always configures the distribution system as it deems most fit.

However, system operators may still expect the distribution system to be configured in a predetermined manner (provided emergency conditions don't exist). The first reason for this expectation is safety in knowing the present state of the system. Beyond safety there are engineering reasons, internal political reasons and legacy reasons why there is a normal distribution state. These reasons may be overcome in the future, and hence the desire to provide now the capability for continuous system optimization.

For now, "normal" is still where the distribution automation returns the distribution system when all else is stable, even if this is not the most optimum configuration. Load balancing is still necessary; however, considering the multitude of times when the distribution system is not stable. For example, with CORA and as demonstrated in the example of Figs. 11 a - 11 o, it is possible that load is transferred in a way that the circuit cannot stay configured for an extended period of time. Therefore once all unfaulted load is restored the distribution automation should look for opportunities to distribute the load more evenly.

A load balancing algorithm may then have degrees of action it will take, first based on user configured parameters, and second on the real world conditions. Possible user configurable settings might be:
- Disabled
- Only Following Transfer
- Interactively Only
- Optimal Use of Utility Generation
- Optimal Use of Co-generation and Micro-generation
- In Conjunction with Volt/Var Requirements
- Time Scheduled

Strategies such as these could be compared with strategies on the capacitor control, though different in scale. They may be allowed to only operate within a specified timeframe, only operate once or a limited number of times, or have other restrictions and overrides that prevent the distribution system from getting too far out of human control.

The idea of load balancing "strategies" implies that there is a unified view of the load balancing system, possibly a single point of interface. It might even imply centralized control algorithm. While this is the impression that might be given (and probably should be given from an operational perspective) the actual implementation will be consistent with the distributed logic model and enhanced with additional logic called for purposes of this disclosure the Commissioner and the Time Loading Curve (TLC).

The Commissioner, which is not part of the invention, is a mobile autonomous software agent, in many ways similar to the Coach, but with new responsibilities and a more global view. The Commissioner travels between, and executes in, the sources that are available to the distribution system, preferably on a communication backbone, e.g., a fiber backbone (though a secondary route through a mesh radio network can be used if the backbone is lost). Data the Commissioner uses is a combination of local data (substation RTU, etc.), Netlist data from the distribution system, and user input/configuration.

The Commissioner is ultimately involved with the following activities:
- Load balancing/shifting/shedding
- Permanent circuit reconfiguration, "new normal"
- Use and coordination of alternate and renewable energy sources
- Return-to-Normal (a.k.a. RTN Manager)
- Site acceptance testing

The hardware associated with the Commissioner can be either a universal interface module (UIM)-style S&C Electric Company device, or if an open standard is adopted, a 3<rd> party substation RTU. The platform must provide adequate resources for a very communications intensive application.

As with the Coach, the primary advantages of the mobile autonomous agent architecture are its natural coordinating ability, and its inherent security (no single source of failure/attack). Execution of its algorithms can occur at any location, i.e., any node in the distribution system, but may be limited only to occur if the Commissioner is present. Algorithms will be included to handle failed communication and damaged hardware contingencies.

The TLC is a relatively slow process by which loading and capacity predictions are made locally at each system node (Team Member). It is the general monitoring component of the load balancing process. Some key points that may be included in TLC logic are:
- Each Team Member does a TLC calculation to determine if it is approaching critical loading/capacity levels. The rate of loading/capacity change over time will predict the point at which the circuit segment(s) will overload. This is much like a very slow relay TCC.
- A TLC is considered active when it enters a rate of change that will place the circuit in an overload condition if the rate does not decline.
- A declining TLC resets the active state when it has been determined to be declining and history data indicates that it should decline for this time of year and time of day and day of week.
- Each tie switch evaluates the TLC for each switch in the Netlist.
- Each tie switch evaluates the best source from potential alternate sources on its circuit.
- Alternate Circuits with TLC's that are in an active state are obviated from being potential alternate sources.
- Each tie switch will evaluate the probable result of closing into its alternate source and opening the primary source switch for whether it will place any of the alternate source switches into a TLC active state. If it does then this alternate source is obviated from being a potential alternate source.
- The tie switch will evaluate its capacity opportunities for successive source switches to be opened as an opportunity to transfer capacity.
- Capacity alert reports shall be issued when a circuit segment is determined to be in an active TLC state.
- If no other action is possible, the TLC logic may find it necessary to drop load, possibly on a prioritized basis.
- The Commissioner will calculate TLC's at the circuit heads, and will augment this with TLC information received from Team Member devices.

Through a combination of the TLC processing and the algorithms run by the Commissioner a process is created that is essentially predictive load manipulation based on a distributed GIS (Geographic Information System).

To perform the load transfers themselves the Commissioner will coordinate with the Coaches through a series of event messages. Coaches will in turn coordinate with their resources to operate switches and relays, potentially making settings group changes or other device specific activity.

One additional action a Commissioner might take if conditions require is overload sharing (or rolling overload). This is the managed movement of an overload condition between a number of sources when all sources are close to or over their maximum capacity. In this case a portion of load will be rotated around so that no source is overloaded for an extended period.

While load balancing and load shedding may be an automatic feature that changes the circuit configuration based on sensed conditions, permanent changes to circuit configurations are commonly performed by system engineers and operators to account for new loads and new facilities. Historically this has been difficult to manage due to the configuration changes needed at each related control in the field.

Here, as with load balancing, it is important to recognize that a circuit configuration state called "normal" is required. Two potential methods to handle the reconfiguration are: i) a scripted automatic reconfiguration, and ii) a manual reconfiguration followed by an "accept as new normal" signal. Both may be implemented and the operator can choose between using one or the other based on integration with their normal operating procedures.

Scripted automatic reconfiguration shares functionality with site acceptance testing processes described below. A sequence of operations is written into a script and the script is loaded into the appropriate field devices. A script interpreter is included in each field device for the purpose of running scripts made for various reasons. The script execution at each of the applicable locations is coordinated based on GPS time. At a specified time all devices begin the execution that will put those devices in their new states in a carefully choreographed sequence. When complete the new state of the system is accepted as "normal".

The creation of these scripts may be a product of the Testing/Setup/Analysis Application. Operation of these scripts can also be easily lab tested in the application using an Instant Replay type of process.

The second method is manual reconfiguration followed by signal to "accept new normal". With this method the choreographed script operation is simply replaced with human operation. Through suitable communications, e.g., SCADA, or local operation utility personnel reconfigure the field devices as required. Once complete a command is sent that instructs all devices to accept their new configuration as the normal configuration.

Given the load balancing features mentioned earlier, with an additional layer of logic and the necessary information the distribution system could coordinate the use of co-generation, micro-generation, storage and other alternate/renewable energy sources within the distribution system. When necessary the distribution automation could even make use of these sources to island blocks of load.

To attempt to maximize a variable resource like wind or solar the distribution automation may provide the following functions:
- Providing a transfer trip signal to the renewable source to command it off line in the event of a utility disturbance. This will enhance the already present anti-islanding function.
- When distributed generation is off line due to a utility disturbance caused by an upstream fault, seek fast, CORA or CORA-like restoration if an alternate source has been selected and the distributed resource is disconnected from the utility grid. IEEE 1547 suggests a 5 minute delay after a utility disturbance to allow re-closers to complete their sequence; however, this is not needed if the fault has been isolated.
- Using its minimum loss algorithm to re-configure the distribution circuit when distributed generation provides enough power to make the re-distribution economical. This occurs when source 1 (the connected source) is less heavily loaded (amp load/rating) than source 2 (the alternate source) by the hysteresis amount (in amps or %) after accounting for the transferred load.

Additional distribution automation functionality in combination with storageatchable generation:
- Dispatchable generation is generation that can provide power to a variable load. A diesel or natural gas generator is considered dispatchable. The discussion below that refers to storage also applies to dispatchable sources of energy.
- The distribution automation will measure amps in the power and VAR directions. With storage capable of outputting pure VARS in the producing or consuming direction and power in the producing and consuming direction, calculating the load amps in every field accurately is possible in the power and VAR directions.
- The distribution automation will measure amps to will allow better calculation of field loads so the battery system can provide power to as many loads as possible. Resolution of 1 part in 1000 at rated current is anticipated. So if a 34.5kV 600A circuit is protected, the resolution is 0.6 amps.
- The distribution automation will establish field priorities, the higher the priority of a field, the higher its priority in terms of when it is connected. Priorities can be set in a range, e.g., from 1 to 10 or 1 to 100. If the distribution automation can connect a field with a priority of 100 or a field with a priority of 90 with the next switch to close, the field with a priority of 100 will be energized next. If an overload is occurring, the field with a priority of 90 will be disconnected prior to the field with a priority of 100. Alternatively, numbers from 101 to 200 as alternating priority fields may be used. In this case field 1 and field 2 with a priority of 150 would be connected first with field 1 taking priority, the next time a decision was made, field 2 would have priority.
- If island load is increasing and begins to overload the storage system, the distribution automation will disconnect a field to reduce the load on the island. The decision will be made on the priority (or lack of priority) level of all individual fields that could be individually disconnected. Fields that if disconnected would disconnect other fields will not be disconnected to reduce load.
- The distribution automation will look at the boundary between the islanded grid and the utility. If there is good voltage on both the islanded grid and the utility grid, and the utility grid has been good for enough time (5 minutes is recommended by IEEE 1547), the utility switch will ask the island storage source for permission to connect. The island storage source will give permission, then move to a frequency hunting mode. When the Island and utility are in phase, the utility switch will close. The hunting mode will cause the power to change at the island storage source, the island storage source will change frequency to see if that changes the power, if it does, it will continue until its power reverses, then it will move to the utility connected mode. If power continues to increase or stays the same, the island storage source will resume its frequency hunting mode. When the utility switch closes, it will send a message to the island storage source to resume utility paralleled mode.
- The distribution automation will send information, e.g., a bit, to let connected storage know if there is more than one source of storage. In this case, the storage will operate in a frequency and voltage droop mode when islanded. This allows any number of storage sources to operate in parallel while islanded. • When multiple storage sources are connected together in an island, the distribution automation will slowly increment or decrement the frequency reference to the storage sources. This allows the island to run at approximately system frequency, e.g., 60Hz, while still running in a droop mode.
- The distribution automation will synchronize the islanded grid to the utility. When they are synchronized, the utility tie switch will close, and distribution automation will tell the storage that the utility is connected and it should return to the utility connected mode.

Additional distribution automation functionality in combination with storage or dispatchable generation with distributed generation:
- When an island has been formed and is supported by storage, the distribution automation will ask for a fast restart of any distributed generation that was disconnected due to a utility fault that the distribution automation has disconnected.
- The distribution automation will when forming an island tell the storage source that it is the frequency reference for the island. This will disable the storage source anti-islanding feature.
- Storage will provide a frequency reference for the distributed generation source, allowing it to run without tripping the anti-islanding feature of the distributed generation source.
- Storage will provide the power balance on the island, charging or discharging to keep the island frequency stable, and thereby the power generated equal to the power consumed in the island.
- The Storage will tell the distribution automation the amount of generation that could be used, and distribution automation will connect generation that is no larger than the available island power using the generation priority. The storage will tell the distribution automation when there is too much generation within the island, the distribution automation will disconnect (curtail) generation according to the generation priority.

### Site Acceptance Test

To assist the ability to manage these new features of distribution automation there may be a PC based application that is involved with the testing, setup, and analysis of the system. Such an application may take the form of a system designer and performs the tasks necessary to support the distribution automation test system.

The functions of the distribution automation designer application may include:
- **Circuit drawing** - The application provides the ability to easily draw one-line representations of the circuit or system on which the distribution automation will be applied.
- **Setpoint input** - The application may allow the entry of distribution automation related configuration parameters for each device on the circuit. Optionally other configuration parameters can be added as well. Many setup parameters, especially team parameters, can be automatically determined as attributes of the circuit drawing.
- **Configuration file output** - The necessary input files can be produced to load the configuration into field devices, locally or remotely.
- **Netlist output** - Also a product of the drawn circuit is the Netlist itself. It too can be output as a configuration file to be loaded into field devices.
- **Lab test monitoring** - Interface to test systems to display progress of a test and provide some control over the test.
- **SAT script creation** - A product of the lab test (or factor acceptance test, FAT) can be a site acceptance test (SAT) script, which can duplicate the factory acceptance test out in the field. Almost as a keystroke macro records the keys pressed as you perform an action on the computer, this functionality can record the actions of the test system so that they can be replayed in the field.
- **Script testing** - Although the SAT script is a copy of what ran in the FAT, for further verification the script can be executed in the test system, giving added assurance that the SAT will perform as expected.
- **SAT script result display** - Since it is difficult to observe the SAT script in action it is necessary to retrieve and display the results from the field devices. These results can be displayed as a consolidated and collated log, and it can be displayed as an Instant Reply of the actions as they occurred in the field.
- **Instant Replay of lab tests, of SATs, of real field events** - As mentioned above, SAT script results can be displayed in an Instant Replay. This is essentially the same as the Instant Replays of lab tests and FATs. In addition though, real field events (fault isolation, restoration, load manipulation) should also be able to be displayed as an Instant Replay.
- **Run what-if scenarios** - An ability to easily create and execute scenarios within a designed circuit is an important feature for building customer confidence. This is an existing feature that should be carried over to the new application.

The distribution automation designer may also include:
- configuration file and Netlist delivery (field or lab) script delivery
- communication integration
- integration with protection analysis program
- detailed performance analysis

An example of this last item, detailed performance analysis, may include the distribution automation designer calculating CMI, SAIDI, SAIFI or CAIDI, and saved minutes of interruption. This would be possible by entering the number of customers in each team as a part of the configuration. Perhaps it could even include downstream fuse operations by watching the fault current and breaking out the number of customers connected on fused laterals.

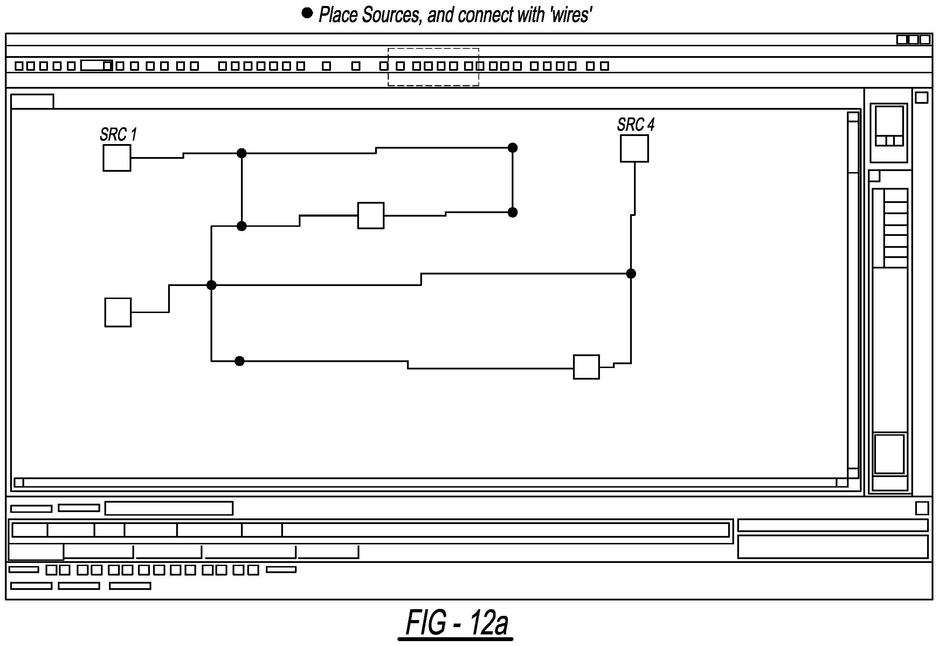

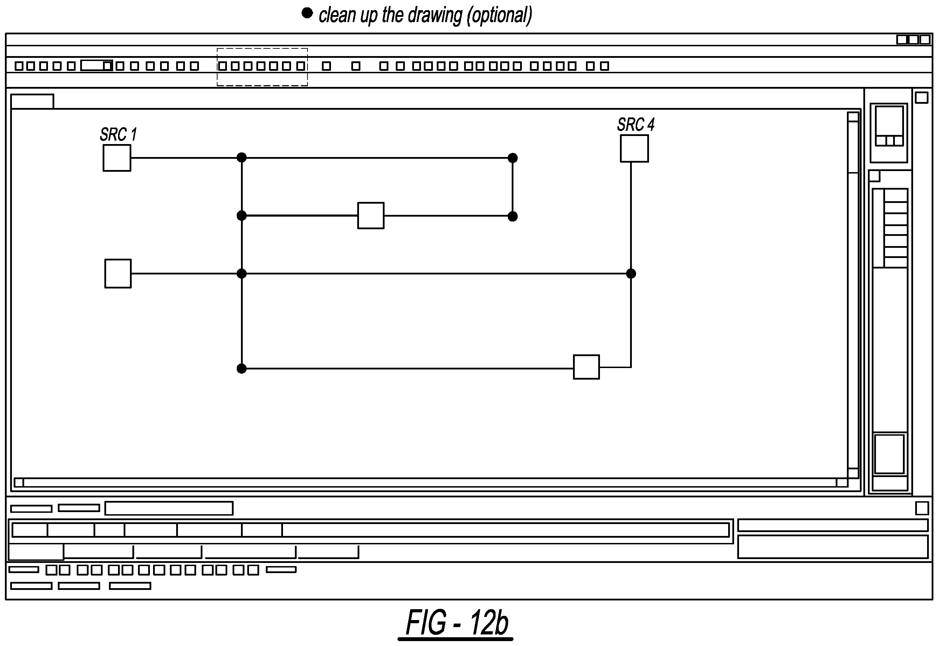

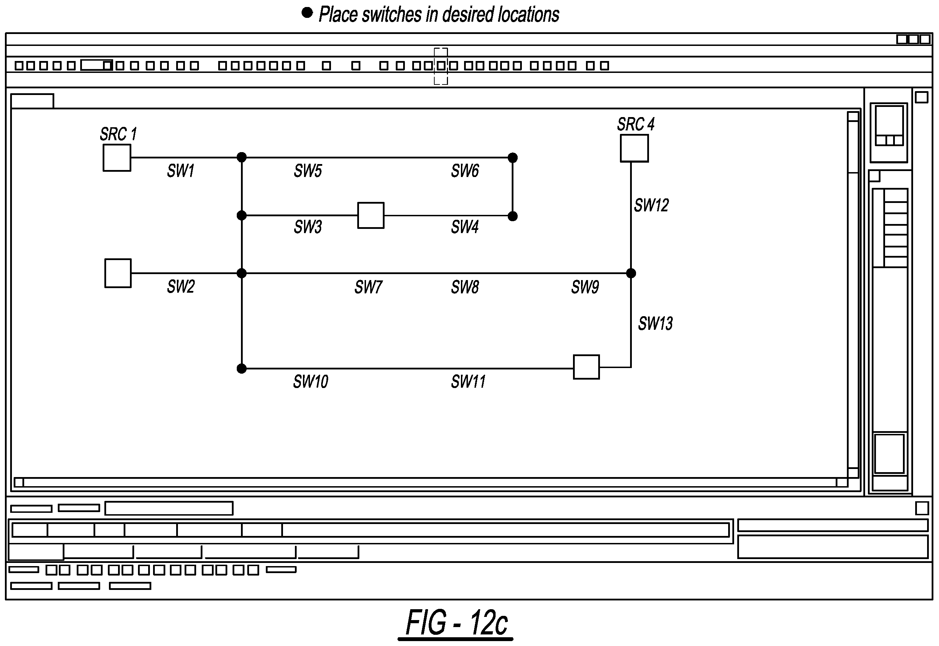

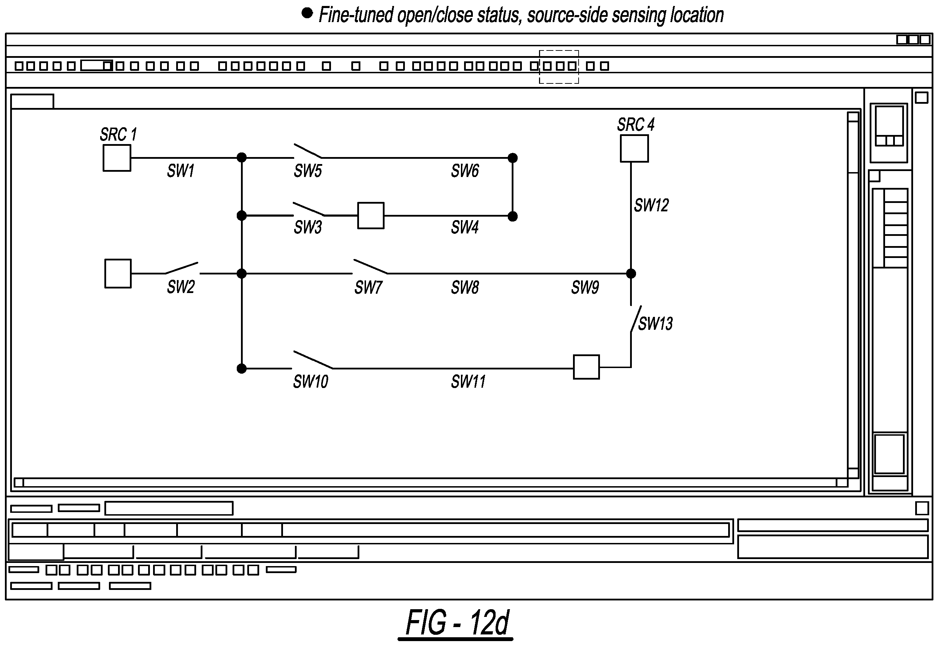

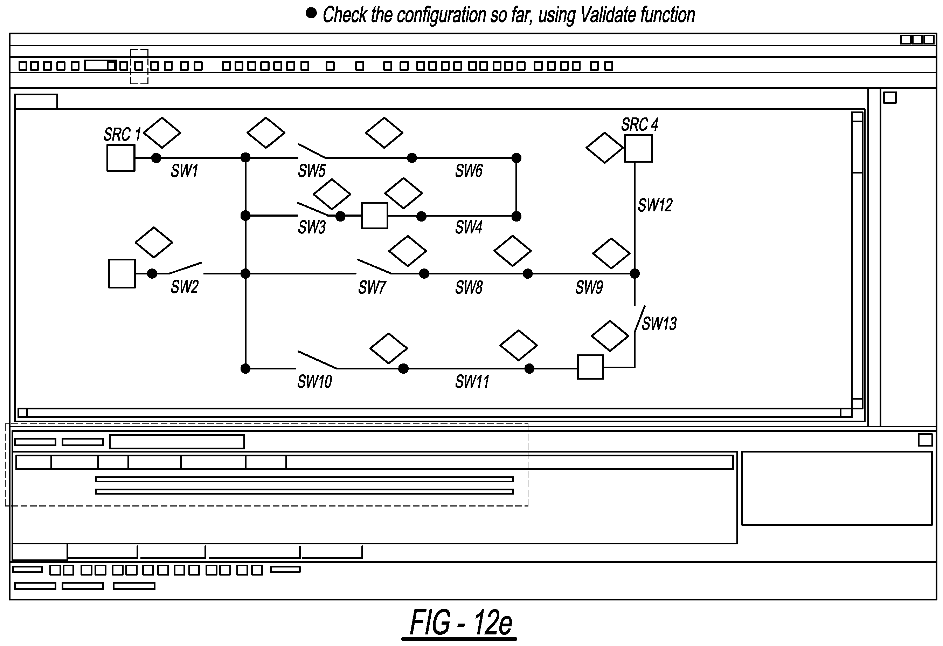

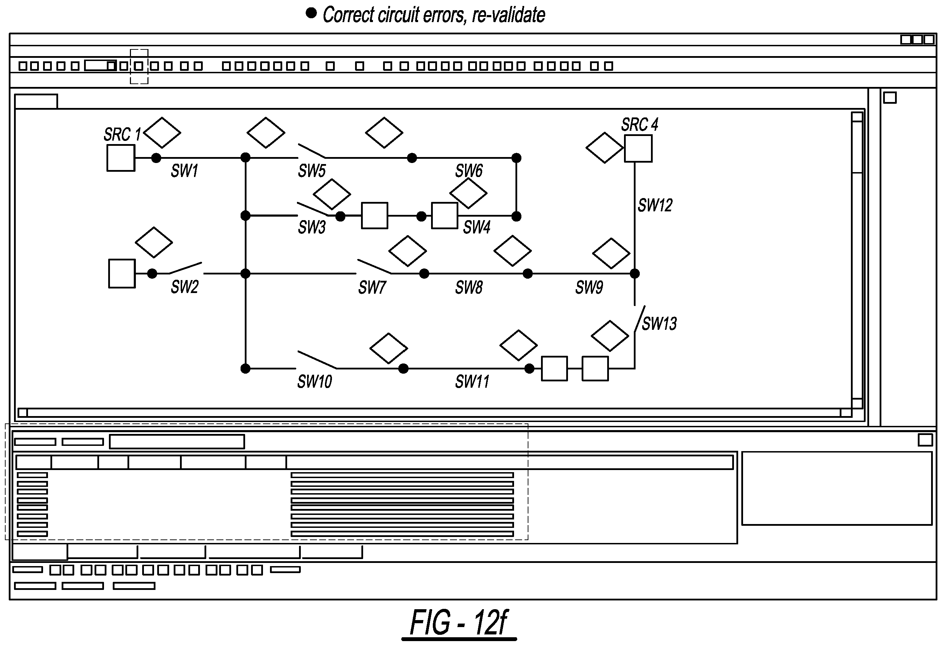

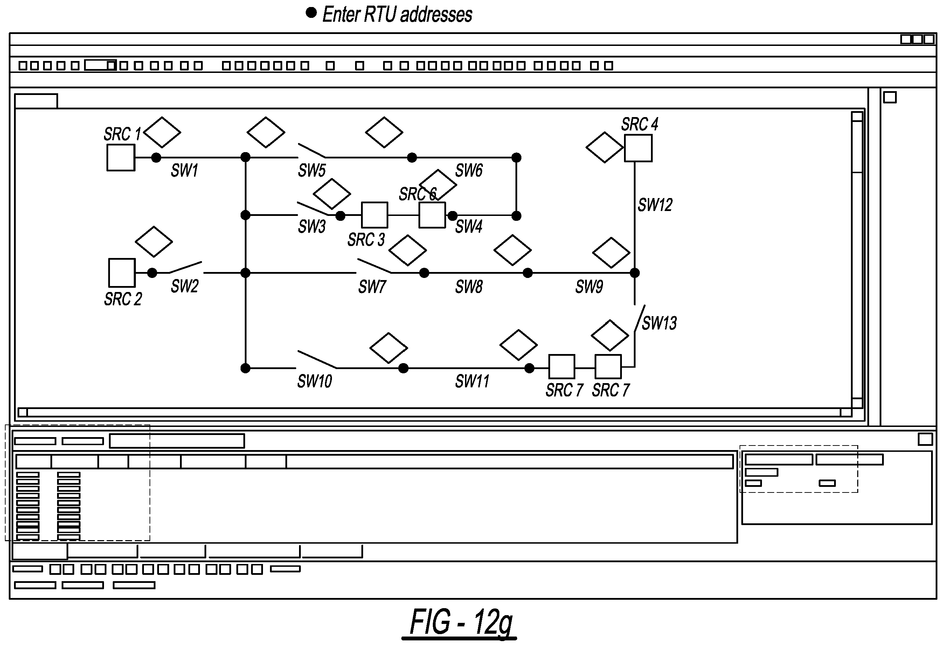

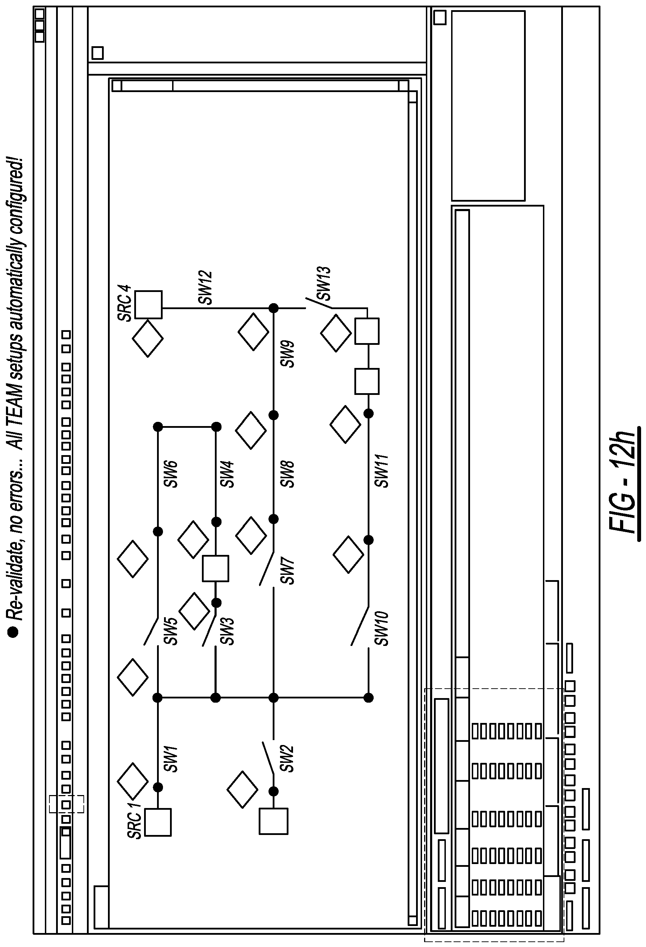

Referring to Figs. 12a - 12h, screen shots illustrating operation of a designer tool that may be used to design and configure a distribution system are depicted. In Fig. 12a, sources are identified and placed and roughly connected by "wires," i.e., depiction of the actual physical connections. In Fig. 12b, the layout may be automatically, optionally cleaned up and scaled. At Fig. 12c, nodes, e.g., switches, are placed at desired locations and identified. At Fig. 12d, the open/closed status and source-side of the nodes is defined. A validation function is then used, Fig. 12e, to check the configuration, with any errors being corrected and the system being re-validated, Fig. 12f. Address information is then added for the nodes, Fig. 12g. At Fig. 12h, the Teams are setup and automatically configured. Separate data entry page is provided for each node to enter configuration and other operating data for that node. The designer tool may then generate configuration files including graphic layout files, Team setup data and device types and device parameters. This data may then be made available and incorporated into the Netlist and deployed into the distribution system via wired, wireless communication or direct serial connection to the nodes. The designer tool furthermore may be used to define new system configurations. Using the graphic interface node configurations may be changed to the "new" desired configuration, a new Netlist generated and pushed out to the system nodes and either manual or automatic acceptance used to engage the new "normal" state.

The distribution automation site automation testing (SAT) tool provides a means to configure various circuit events and demonstrate the distribution automation response to them- all on an actual field deployment of automation-enabled controls. This tool provides an ability to extend the usual Factory Acceptance Tests (FATs) conducted on distribution automation test systems to the actual customer system deployed on the customer's circuit utilizing the communications system. The supported circuit events at least include faults and losses of voltage (including losses of substations). The emulation of those events are such that the distribution automation operates exactly the way it would in response to those same "real", non-emulated events. Furthermore, as the distribution automation is a system that is highly dependent on Peer-to-Peer communications, any acceptable SAT solution should introduce as few SAT- specific communications during the test as possible, preferable none at all. Finally, a SAT solution should provide conclusive feedback as to whether the test succeeded or failed (that is, did the distribution automation transfer/return to normal correctly and on time), along with a summary of the distribution automation decisions and operations, at all participating controls.

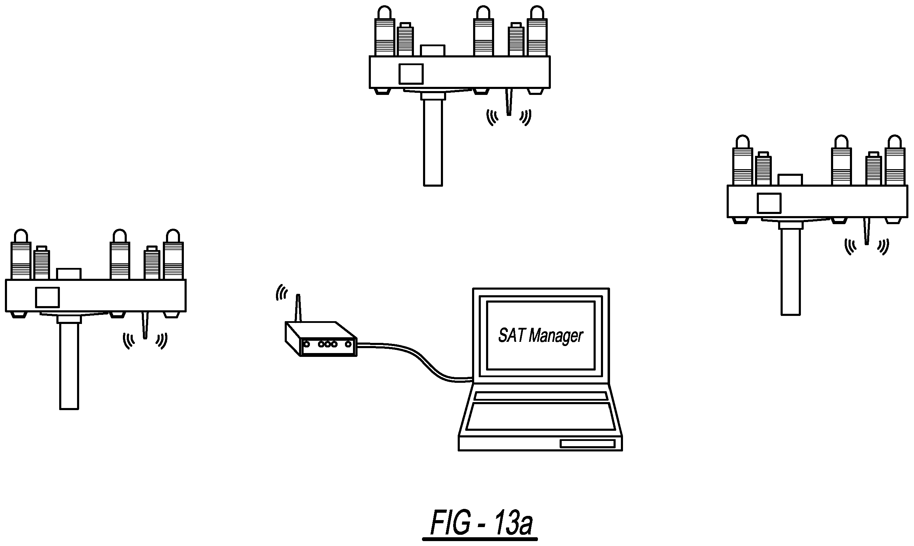

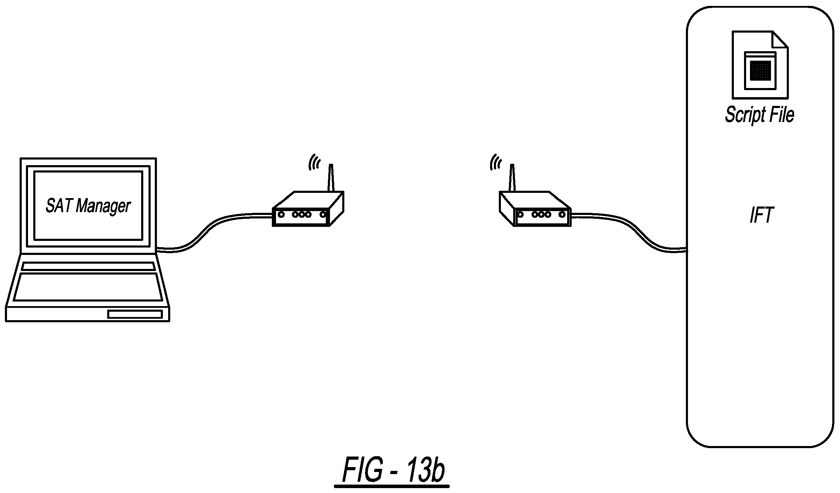

A PC-Based GUI program (referred to in this discussion as the SAT Manager) is used by the user to configure the SAT scenario. This includes the controls included in the test and the circuit conditions/scenario used for the test. Figa.13a - 13c provide a representative example of a SAT test system. SAT Manager creates the unique scripts for each control in the test. Using the distribution automation communications system, these scripts are "pushed" out to each control and stored in local memory. For example, the script may be pushed through the radio network to each node controller in the test or universal interface module (UIM) for the device. Alternatively, a single script with unique lines for each control may be pushed to all nodes, with the identity of the node identifying which lines of the common script to execute, Fig. 13b.

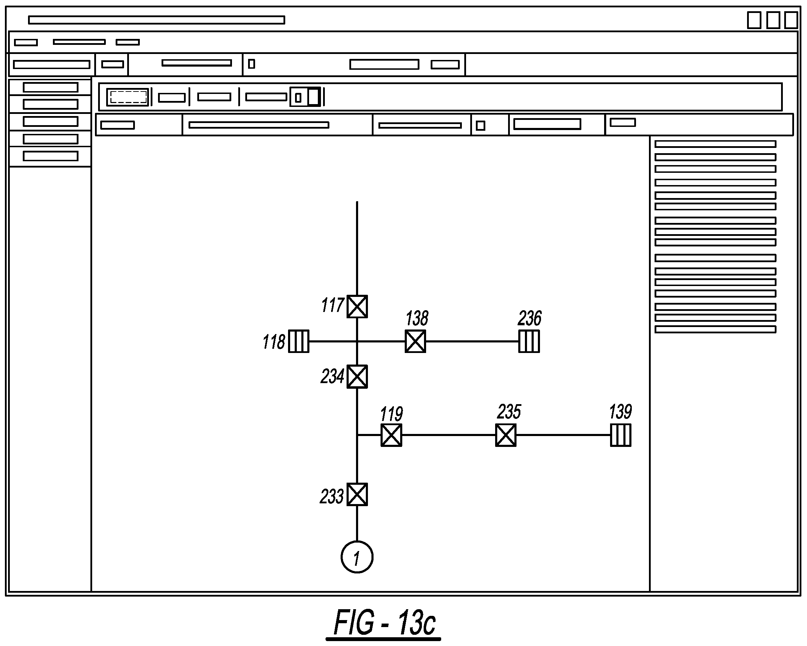

The start time for the SAT test is configured as part of the SAT input and the control's GPS (or user) synchronized time is used to start all the scripts at the prescribed start time. Special enabling logic in each control runs the script and presents the processor running the distribution automation logic with the analog and digital inputs based on the defined sequence of circuit conditions and/or actions. The actual distribution automation logic is exercised to perform the test. The switch operations resulting SAT scenario and the distribution automation restoration logic can either be virtual or real based on the user's choice. After the SAT is complete, the SAT Manager collects the relevant event logs and information from each control over the communications system, collates and analyzes the results which are then presented to the user. For example, a data trap may take control of messaging between the restoration logic processing and the device control to collect and communicate to the SAT Manager. The distribution automation results can presented in tabular form or also can be provided as a graphical "Instant Replay" of all the switch conditions and operations as a visual confirmation of the test results, Fig. 13c.

The SAT permits validation of actual system operating mode logic and may be performed using the actual device controls and application algorithms. Additionally, the actual device settings are used, and alternate device settings may be tested. Communications connectivity and stability can be tested and verified and actual live messaging between nodes viewed or later reviewed.

## Claims

1. A system for automated reconfiguration of an electrical power distribution system, comprising:
a plurality of nodes (IR1-9) being located in the distribution system;
a plurality of node controllers controlling respective nodes in the plurality of nodes (IR1-9) and including resources which are configured to monitor the distribution system, which source, permit or inhibit flow of electricity in the distribution system in response to detection of a condition requiring reconfiguration of the distribution system, to communicate information with at least one other node controller in the plurality of node controllers to transmit and receive communicated information; and to affect the state of the associated node (IR1-9) to source, permit or inhibit flow of electricity in accordance with one of a first operating mode and a second operating mode different to the first operating mode,
the first operating mode being a primary operating mode and comprising a rapid restoration mode wherein a first node is operable to query the communicated information to identify at least one resource that is operable to affect an optimal service restoration based on a minimal switching operation;
**characterised in that**
the system comprises a software agent, which is configured to move between the nodes (IR1-9), and
a software layer, which is configured to interact with the software agent at some of the nodes (IR1-9);
wherein, after an isolating event, the software agent is configured to request the software layer to initiate the first operating mode; and
wherein, if the initiation is not successful, the software agent is configured to begin the second operating mode.

2. The system of claim 1, wherein the first operating mode and the second operating mode are automatically selected based upon a condition of the distribution system.

3. The system of claim 1, wherein the second operating mode is employed as a fall back restoration mode.

4. The system of claim 1, wherein the rapid restoration mode comprises a mode of operating wherein a minimum number of the nodes (IR1-9) are operated so as to affect service restoration to a maximum number of users of the electricity.

5. The system of claim 1, further comprising a third operating mode, different than either the first operating mode and the second operating mode.

6. The system of claim 5, wherein the third operating mode comprises a load shedding/load balancing operating mode.

7. The system of claim 5, wherein the third operating mode comprises a system reconfiguration operating mode.

8. The system of claim 5, wherein the third operating mode comprises a configuration test mode.

9. The system of claim 8, wherein the configuration test mode comprises a site acceptance test mode.

10. The system of claim 1, wherein the node controllers comprise a distributed database containing data identifying each of the nodes (IR1-9) and associated node controllers and interconnections of the nodes and node controllers to other nodes and node controllers.

11. The system of claim 10, wherein the distributed database comprises data identifying loading of nodes (IR1-9) in the distribution system.

12. The system of claim 10, wherein the distributed database comprises data reflecting all nodes (IR1-9), static resource capabilities of the nodes, real-time resource utilization of the nodes, and a table describing the interconnection of all nodes.

13. The system of claim 1, wherein the nodes (IR1-9) comprise virtual nodes and real nodes.

## Patentansprüche

1. Ein System für die automatisierte Neukonfiguration eines elektrischen Leistungsverteilungssystems, das Folgendes aufweist:
eine Vielzahl von Knoten (IR1-9), die im Verteilungssystem positioniert sind;
eine Vielzahl von Node Controllers, die entsprechende Knoten in der Vielzahl von Knoten (IR1-9) steuern und Ressourcen einschließen, die dazu konfiguriert sind, das Verteilungssystem zu überwachen, die als Reaktion auf die Erfassung einer Bedingung, die eine Neukonfiguration des Verteilungssystems erfordert, den Stromfluss im Verteilungssystem einleiten, erlauben oder unterbinden, Informationen an mindestens einen weiteren Node Controller in der Vielzahl von Node Controllers zu übermitteln, um die übermittelten Informationen zu senden und zu empfangen; und den Status des verbundenen Knotens (IR1-9) zu beeinflussen, damit er den Stromfluss einleitet, erlaubt oder unterbindet, in Übereinstimmung mit entweder einem ersten Betriebsmodus oder einem zweiten Betriebsmodus, der sich vom ersten Betriebsmodus unterscheidet,
wobei der erste Betriebsmodus ein primärer Betriebsmodus ist und einen Schnellwiederherstellungs-Modus aufweist, bei dem ein erster Knoten die übermittelten Informationen abfragen kann, um mindestens eine Ressource zu identifizieren, die eine optimale Service-Wiederherstellung auf der Basis eines minimalen Schaltbetriebs beeinflussen kann;
**dadurch gekennzeichnet, dass**
das System einen Software-Agenten aufweist, der dazu konfiguriert ist, sich zwischen den Knoten (IR1-9) zu bewegen, und
eine Software-Schicht, die dazu konfiguriert ist, an einigen der Knoten (IR1-9) mit dem Software-Agenten zu interagieren;
wobei der Software-Agent dazu konfiguriert ist, nach einem Vereinzelungsereignis die Software-Schicht dazu aufzufordern, den ersten Betriebsmodus zu initiieren; und
wobei der Software-Agent dazu konfiguriert ist, wenn die Initiierung nicht erfolgreich ist, den zweiten Betriebsmodus zu starten.

2. Das System gemäß Anspruch 1, wobei der erste Betriebsmodus und der zweite Betriebsmodus auf der Basis einer Bedingung im Verteilungssystem automatisch ausgewählt werden.

3. Das System gemäß Anspruch 1, wobei der zweite Betriebsmodus als ein Rückfall-Wiederherstellungsmodus genutzt wird.

4. Das System gemäß Anspruch 1, wobei der Schnellwiederherstellungs-Modus einen Betriebsmodus aufweist, bei dem eine minimale Anzahl der Knoten (IR1-9) so betrieben werden, dass sie Service-Wiederherstellung für eine maximale Anzahl von Nutzern der Elektrizität beeinflussen.

5. Das System gemäß Anspruch 1, das weiter einen dritten Betriebsmodus aufweist, der sich vom ersten Betriebsmodus und dem zweiten Betriebsmodus unterscheidet.

6. Das System gemäß Anspruch 5, wobei der dritte Betriebsmodus einen Lastabwurf-/Lastausgleich-Betriebsmodus aufweist.

7. Das System gemäß Anspruch 5, wobei der dritte Betriebsmodus einen System-Neukonfigurations-Betriebsmodus aufweist.

8. Das System gemäß Anspruch 5, wobei der dritte Betriebsmodus einen Konfigurationstestmodus aufweist.

9. Das System gemäß Anspruch 8, wobei der Konfigurationstestmodus einen Site Acceptance Test-Modus aufweist.

10. Das System gemäß Anspruch 1, wobei die Node Controller eine verteilte Datenbank aufweisen, die Daten zur Identifizierung jedes der Knoten (IR1-9) und der verbundenen Node Controller und Schaltverbindungen der Knoten und Node Controller zu anderen Koten und zu anderen Node Controller enthält.

11. Das System gemäß Anspruch 10, wobei die verteilte Datenbank Daten aufweist, die die Belastung der Knoten (IR1-9) im Verteilungssystem identifizieren.

12. Das System gemäß Anspruch 10, wobei die verteilte Datenbank Daten aufweist, die alle Knoten (IR1-9), statischen Ressourcen-Funktionen der Knoten, die Echtzeit-Ressourcennutzung der Knoten und eine Tabelle zur Beschreibung der Schaltverbindung aller Knoten wiederspiegelt.

13. Das System gemäß Anspruch 1, wobei die Knoten (IR1-9) virtuelle Knoten und reale Knoten aufweisen.

## Revendications

1. Système de reconfiguration automatisée d'un système de distribution d'électricité, comprenant :
une pluralité de nœuds (IR1-9) qui sont installés dans le système de distribution ;
une pluralité de dispositifs de commande de nœud qui commandent des nœuds respectifs dans la pluralité de nœuds (IR1-9) et qui comprennent des ressources qui surveillent le système de distribution, qui alimentent, permettent ou empêchent le flux d'électricité dans le système de distribution en réponse à la détection d'une condition exigeant une reconfiguration du système de distribution, qui communiquent des informations avec au moins un autre dispositif de commande de nœud de la pluralité de dispositifs de commande de nœud de façon à transmettre et recevoir des informations communiquées, qui affectent l'état du nœud associé de (IR1-9) façon à alimenter, permettre ou empêcher le flux d'électricité conformément à un mode de fonctionnement parmi un premier mode de fonctionnement et un deuxième mode de fonctionnement, le deuxième mode de fonctionnement étant différent du premier mode de fonctionnement,
le premier mode de fonctionnement étant un mode de fonctionnement primaire et comprenant un mode de restauration rapide dans lequel un premier nœud peut fonctionner pour interroger les informations communiquées pour identifier au moins une ressource qui peut fonctionner pour affecter une restauration de service optimale sur la base d'une opération de commutation minimale ;
**caractérisé en ce que**
le système comprend un agent logiciel, qui est configuré pour se déplacer entre les nœuds (I1R1-9), et
une couche logicielle, qui est configurée pour interagir avec l'agent logiciel au niveau de certains des nœuds (1R1-9) ;
dans lequel, après un événement d'isolement, l'agent logiciel est configuré pour demander à la couche logicielle de lancer le premier mode de fonctionnement ; et
dans lequel, si le lancement ne réussit pas, l'agent logiciel est configuré pour commencer le deuxième mode de fonctionnement.

2. Système selon la revendication 1, dans lequel le premier mode de fonctionnement et le deuxième mode de fonctionnement sont automatiquement sélectionnés sur la base d'une condition du système de distribution.

3. Système selon la revendication 1, dans lequel le deuxième mode de fonctionnement est utilisé comme mode de restauration de repli.

4. Système selon la revendication 1, dans lequel le mode de restauration rapide comprend un mode de fonctionnement dans lequel un nombre minimum de nœuds (IR1-9) sont exploités de sorte à affecter la restauration du service à un nombre maximum d'utilisateurs de l'électricité.

5. Système selon la revendication 1, comprenant en outre un troisième mode de fonctionnement, différent du premier mode de fonctionnement et du deuxième mode de fonctionnement.

6. Système selon la revendication 5, dans lequel le troisième mode de fonctionnement comprend un mode de fonctionnement à délestage/équilibrage de charge.

7. Système selon la revendication 5, dans lequel le troisième mode de fonctionnement comprend un mode de fonctionnement de reconfiguration du système.

8. Système selon la revendication 5, dans lequel le troisième mode de fonctionnement comprend un mode de test de configuration.

9. Système selon la revendication 8, dans lequel le mode de test de configuration comprend un mode de test d'acceptation de site.

10. Système selon la revendication 1, dans lequel les dispositifs de commande de nœud comprennent une base de données distribuée contenant des données identifiant chacun des nœuds (IR1-9) et les dispositifs de commande de nœud associés et les interconnexions des nœuds et dispositifs de commande de nœud à d'autres nœuds et dispositifs de commande de nœud.

11. Système selon la revendication 10, dans lequel la base de données distribuée comprend des données identifiant le chargement de nœuds (IR1-9) dans le système de distribution.

12. Système selon la revendication 10, dans lequel la base de données distribuée comprend des données reflétant tous les nœuds (IR1-9), les capacités de ressources statiques des nœuds, l'utilisation des ressources en temps réel des nœuds et un tableau décrivant l'interconnexion de tous les nœuds.

13. Système selon la revendication 1, dans lequel les nœuds (IR1-9) comprennent des nœuds virtuels et des nœuds réels.
